# EUROPEAN PATENT APPLICATION

(11) **EP 4 510 347 A1**
(43) Date of publication of application: **19.02.2025**
(21) Application number: 22944629.9
(22) Date of filing: 25.11.2022
(51) Int. Cl.: H01M 50/342, H01M 50/102, H01M 50/116

(54) **HOUSING MEMBER, BATTERY CELL, BATTERY, AND ELECTRICAL DEVICE**

(30) Priority: 02.06.2022 WO PCT/CN2022/096957; 17.11.2022 WO PCT/CN2022/132661
(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN)
(74) Representative: Jacob, Reuben Ellis
(86) International application number: PCT/CN2022/134421
(87) International publication number: WO 2023/231328

(57) **Abstract**

Embodiments of the present application provide a housing member, a battery cell, a battery and an electrical appliance, in the technical field of batteries. The housing member comprises a non-weak area and a weak area which are integrally formed; the housing member is provided with a groove part, the non-weak area being formed around the groove part, the weak area being formed at the bottom of the groove part, and the weak area being configured to be damaged when the battery cell releases internal pressure. The hardness of the weak area is H1, the hardness of the non-weak area is H2, and H1 is greater than H2. The hardness of the weak area is greater than that of the non-weak area, and increasing the hardness of the weak area, thereby increasing the strength of the weak area, decreases the risk of the weak area being damaged under normal use conditions of the battery cell, which may effectively prolong the service life of a battery cell.

## Description

### CROSS-REFERENCE TO RELATED APPLICATIONS

This application claims priority to International Patent Application No. PCT/CN2022/096957, filed on June 2, 2022 and entitled "PRESSURE RELIEF APPARATUS, SHELL, BATTERY CELL, BATTERY, AND ELECTRICAL DEVICE", and International Patent Application No. PCT/CN2022/132661, filed on November 17, 2022 and entitled "SHELL COMPONENT, BATTERY CELL, BATTERY, AND ELECTRICAL DEVICE", which are both incorporated herein by reference in its entirety.

### TECHNICAL FIELD

This application relates to the technical field of batteries, and in particular, to a shell component, a battery cell, a battery, and an electrical device.

### BACKGROUND

With the development of new energy technology, batteries are widely applied in more fields such as mobile phones, notebook computers, electric power carts, electric vehicles, electric airplanes, electric ships, electric toy cars, electric toy ships, electric toy airplanes, and electric tools.

In the development of battery technology, the service life of the battery cell in addition to higher safety of the battery cell is a factor to be considered. Therefore, how to increase the service life of the battery cell is an urgent problem in the battery technology.

### SUMMARY

Some embodiments of this application provide a shell component, a battery cell, a battery, and an electrical device to effectively increase the service life of the battery.

According to a first aspect, an embodiment of this application provides a shell component, used for a battery cell, and including a non-fragile region and a fragile region formed in one piece. A groove portion is disposed on the shell component. The non-fragile region is formed around the groove portion. The fragile region is formed at a bottom of the groove portion. The fragile region is configured to be broken when the battery cell is relieved of an internal pressure. A hardness of the fragile region is H₁, and a hardness of the non-fragile region is H₂, satisfying: H₁ > H₂.

In the above technical solution, the hardness of the fragile region is greater than the hardness of the non-fragile region, thereby increasing the hardness of the fragile region, and in turn, increasing strength of the fragile region, reducing the risk that the fragile region is broken when the battery cell is in normal use, and effectively increasing the service life of the battery cell.

In some embodiments, H₁/H₂ ≤ 5. If the H₁/H₂ ratio is unduly high, it is possible that the fragile region is difficult to be broken in a case of thermal runaway of the battery cell. Therefore, the H₁/H₂ ratio is set to be less than or equal to 5, thereby reducing the risk that the fragile region is unable to be broken in time in a case of thermal runaway of the battery cell, and improving the safety of the battery cell.

In some embodiments, H₁/H₂ ≤ 2.5. This setting can further reduce the risk that the fragile region is unable to be broken in time in a case of thermal runaway of the battery cell.

In some embodiments, 5 HBW ≤ H₁ ≤ 200 HBW.

In some embodiments, 5 HBW ≤ H₂ ≤ 150 HBW.

In some embodiments, an average grain size of the fragile region is S₁, and an average grain size of the non-fragile region is S₂, satisfying: S₁/S₂ ≤ 0.9. The average grain size of the fragile region differs greatly from the average grain size of the non-fragile region, thereby reducing the average grain size of the fragile region, improving the mechanical properties of the material in the fragile region, and improving the toughness and fatigue resistance of the fragile region.

In some embodiments, S₁/S₂ ≥ 0.05. If the S₁/S₂ ratio is unduly low, the difficulty of molding the fragile region increases, the strength of the fragile region is unduly high, the fragile region is more difficult to be broken in a case of thermal runaway of the battery cell, and the pressure relief is prone to be delayed. Therefore, the S₁/S₂ ratio is set to be greater than or equal to 0.05, thereby reducing the difficulty of molding the fragile region, and improving the timeliness of pressure relief in a case of thermal runaway of the battery cell.

In some embodiments, 0.1 ≤ S₁/S₂ ≤ 0.5. This setting improves the overall performance of the shell component, ensures that the fragile region can be broken in time in a case of thermal runaway of the battery cell, and also ensures that the fragile region is of sufficient strength during normal use of the battery cell.

In some embodiments, 0.4 µm ≤ S₁ ≤ 75 µm. If S₁ is unduly large, the toughness and fatigue resistance of the fragile region are relatively low. If S₁ is unduly small, the difficulty of molding the fragile region is relatively high, the strength of the fragile region is unduly high, the fragile region is more difficult to be broken in a case of thermal runaway of the battery cell, and the pressure relief is prone to be delayed. Therefore, by satisfying 0.4 µm ≤ S₁ ≤ 75 µm, on the one hand, this application reduces the difficulty of molding the fragile region, and improves the timeliness of pressure relief in a case of thermal runaway of the battery cell; and, on the other hand, this application increases the toughness and fatigue resistance of the fragile region, and reduces the risk that the fragile region is broken when the battery cell is in normal use.

In some embodiments, 1 µm ≤ St ≤ 10 µm. This setting improves the overall performance of the shell component, ensures that the fragile region can be broken in time in a case of thermal runaway of the battery cell, and also ensures that the fragile region is of sufficient strength when the battery cell is in normal use.

In some embodiments, 10 µm ≤ S₂ ≤ 150 µm.

In some embodiments, 30 µm ≤ S₂ ≤ 100 µm.

In some embodiments, a minimum thickness of the fragile region is A, and an average grain size of the fragile region is S₁, satisfying: 1 ≤ A/S₁ ≤ 100. If the A/S₁ ratio is unduly low, the number of grain layers in the fragile region is unduly small in the thickness direction of the fragile region, and the fatigue resistance of the fragile region is unduly low. If the A/S₁ ratio is unduly high, the number of grain layers in the fragile region is unduly large in the thickness direction of the fragile region, and the strength of the fragile region is unduly high, thereby being prone to a risk that the fragile region is not broken in time in a case of thermal runaway of the battery cell. Therefore, by satisfying 1 ≤ A/S₁ ≤ 100, on the one hand, this application causes the number of grain layers to be relatively large in the thickness direction in the fragile region, thereby increasing the fatigue resistance of the fragile region, reducing the risk that the fragile region is broken when the battery cell is in normal use; and, on the other hand, this application enables the fragile region to be broken in a more timely manner in a case of thermal runaway of the battery cell, so as to achieve the purpose of timely pressure relief.

In some embodiments, 5 ≤ A/S₁ ≤ 20. This setting improves the overall performance of the shell component, ensures that the fragile region can be broken in time in a case of thermal runaway of the battery cell, and also ensures that the fragile region is sufficiently fatigue-resistant when the battery cell is in normal use, thereby increasing the service life of the battery cell.

In some embodiments, a minimum thickness of the fragile region is A, satisfying: 5 HBW/mm ≤ H₁/A ≤ 10000 HBW/mm. This setting not only takes into consideration the effect exerted by the thickness of the fragile region on the performance of the shell component, but also takes into consideration the effect exerted by the hardness of the fragile region on the performance of the shell component. By satisfying 5 HBW/mm ≤ H₁/A ≤ 10000 HBW/mm, this application enables sufficient strength of the fragile region when the battery cell is in normal use, and makes the fragile region not prone to be broken by fatigue, thereby increasing the service life of the battery cell; and at the same time, enables the shell component to relieve pressure in time through the fragile region in a case of thermal runaway of the battery cell, thereby reducing the risk of explosion of the battery cell, and improving the safety of the battery cell.

In some embodiments, 190 HBW/mm ≤ H₁/A ≤ 4000 HBW/mm. This setting improves the overall performance of the shell component, ensures that the fragile region can be broken in time in a case of thermal runaway of the battery cell, and also ensures that the fragile region is of sufficient strength when the battery cell is in normal use. On the premise of ensuring the safety of the battery cell, the service life of the battery cell is increased.

In some embodiments, a minimum thickness of the fragile region is A, and a minimum thickness of the non-fragile region is B, satisfying: 0.05 ≤ A/B ≤ 0.95. If the A/B ratio is unduly low, it is possible that the strength of the fragile region is insufficient. If the A/B ratio is unduly high, it is possible that the fragile region is not broken easily in a case of thermal runaway of the battery cell, and the pressure relief is not timely, thereby increasing the probability of explosion of the battery cell. Therefore, by satisfying 0.05 ≤ A/B ≤ 0.95, this application reduces the probability that the fragile region is broken when the battery cell is in normal use, and reduces the probability of explosion in a case of thermal runaway of the battery cell.

In some embodiments, 0.12 ≤ A/B ≤ 0.8. This setting improves the overall performance of the shell component, ensures that the fragile region can be broken in time in a case of thermal runaway of the battery cell, and also ensures that the fragile region is of sufficient strength during normal use of the battery cell.

In some embodiments, 0.2 ≤ A/B ≤ 0.5. This setting further reduces the risk that the fragile region is broken when the battery cell is in normal use, ensures that the fragile region is broken in time in a case of thermal runaway of the battery cell, and improves timeliness of pressure relief.

In some embodiments, 1 mm ≤ B ≤ 5 mm. If B is unduly large, the thickness of the non-fragile region is relatively large, the shell component consumes more material, and the shell component is heavy and less cost-effective. If B is unduly small, the thickness of the non-fragile region is relatively small, and the deformation resistance of the shell component is relatively low. Therefore, B is controlled to fall within 1 mm ≤ B ≤ 5 mm, so that the shell component is cost-effective and well resistant to deformation.

In some embodiments, 1.2 mm ≤ B ≤ 3.5 mm. This setting makes the shell component more cost-effective and more resistant to deformation.

In some embodiments, 2 mm ≤ B ≤ 3 mm.

In some embodiments, 0.02 mm ≤ A ≤ 1.6 mm. If A is unduly small, the fragile region is difficult to mold, and the fragile region is prone to be damaged during molding. If A is unduly large, it is more difficult to break the fragile region in a case of thermal runaway of the battery cell, and the pressure relief is prone to be delayed. Therefore, A is controlled to fall within 0.02 mm ≤ A ≤ 1.6 mm, thereby reducing the difficulty of molding the pressure relief region, and improving the timeliness of pressure relief in a case of thermal runaway of the battery cell.

In some embodiments, 0.06 mm ≤ A ≤ 0.4 mm. This setting further reduces the difficulty of molding the pressure relief region, and improves the timeliness of pressure relief in a case of thermal runaway of the battery cell.

In some embodiments, the shell component includes a pressure relief region. The groove portion includes one level of nick. The nick is disposed along an edge of the pressure relief region. The pressure relief region is configured to be able to burst open within a boundary defined by the nick. The fragile region forms a bottom of the nick. When the fragile region is broken, the pressure relief region is able to burst open within a boundary defined by the fragile region to implement pressure relief, thereby increasing the pressure relief area of the shell component.

In some embodiments, the shell component includes a first surface and a second surface disposed opposite to each other. The nick is recessed from the first surface toward the second surface. The nick is a groove portion, and is simple in structure. During molding, the nick may be molded on the first surface. The molding is simple, thereby improving production efficiency, and reducing production cost.

In some embodiments, the shell component includes a first surface and a second surface disposed opposite to each other. The groove portion includes multiple levels of nicks. The multiple levels of nicks are disposed sequentially on the shell component along a direction from the first surface to the second surface. The fragile region is formed at a bottom of a level of nick farthest from the first surface. The shell component includes a pressure relief region. Each level of nick is disposed along an edge of the pressure relief region. The pressure relief region is configured to be able to burst open within a boundary defined by the level of nick farthest from the first surface. During molding, multiple levels of nicks may be molded level by level on the shell component, thereby reducing the molding depth of each level of nick, and in turn, reducing the molding force exerted on the shell component during molding of each level of nick, and reducing the risk of generating cracks on the shell component. The shell component is not prone to fail due to the cracks at the position of the nick, thereby increasing the service life of the shell component.

In some embodiments, a level of nick farthest from the second surface is recessed from the first surface toward the second surface. The groove portion includes multiple levels of nicks. The multiple levels of nicks may be machined stepwise in the direction from the first surface to the second surface during molding.

In some embodiments, the shell component includes a first surface and a second surface disposed opposite to each other. The groove portion further includes one level of countersink. The countersink is recessed from the first surface toward the second surface. The pressure relief region is formed on a bottom wall of the countersink. The countersink reduces the depth of the nick when ensuring that the final thickness of the fragile region is constant, thereby reducing the molding force exerted on the shell component during molding of the nick, and reducing the risk of generating cracks on the shell component. In addition, the countersink can provide a clearance when the pressure relief region bursts open. Therefore, even if the first surface is blocked by an obstacle, the pressure relief region can still burst open to relieve pressure.

In some embodiments, the shell component includes a first surface and a second surface disposed opposite to each other. The groove portion further includes multiple levels of countersinks. The multiple levels of countersinks are disposed sequentially on the shell component along a direction from the first surface to the second surface. A level of countersink farthest from the second surface is recessed from the first surface toward the second surface. The pressure relief region is formed on a bottom wall of a level of countersink farthest from the first surface. During molding of multiple levels of countersinks, the molding depth of each level of countersink can be reduced, and the molding force exerted on the shell component during molding of each level of countersink can be reduced, thereby reducing the risk of generating cracks on the shell component. In addition, the multiple levels of countersinks can provide a clearance when the pressure relief region bursts open. Therefore, even if the first surface is blocked by an obstacle, the pressure relief region can still burst open to relieve pressure.

In some embodiments, an internal space of the countersink is a cylinder, a prism, a circular frustum, or a polygonal frustum. This countersink is simple in structure and easy to mold, and can provide more clearance when the pressure relief region bursts open.

In some embodiments, the nick includes a first nick section and a second nick section. The first nick section intersects the second nick section. The first nick section and the second nick section are disposed along an edge of the pressure relief region. The stress is more concentrated at a position of intersection between the first nick section and the second nick section, thereby enabling the fragile region to be broken at the position of intersection between the first nick section and the second nick section first. In a case that a burst pressure of the battery cell is constant, the fragile region can be made thicker, and the molding depth of the nick can be reduced.

In some embodiments, the nick further includes a third nick section. The first nick section and the third nick section are disposed opposite to each other. The second nick section intersects the third nick section. The first nick section, the second nick section, and the third nick section are disposed along the edge of the pressure relief region. In this way, the pressure relief region can burst open within a boundary defined by the first nick section, the second nick section, and the third nick section. When the battery cell is relieved of pressure, the pressure relief region can burst open more easily, and a large area of the shell component can be used for relieving pressure.

In some embodiments, the first nick section, the second nick section, and the third nick section are connected sequentially. The first nick section, the second nick section, and the third nick section define one pressure relief region.

In some embodiments, the first nick section, the second nick section, and the third nick section define two pressure relief regions. The two pressure relief regions are located on two sides of the second nick section respectively. The two pressure relief regions can burst open in two-piece form to relieve pressure, thereby effectively improving the pressure relief efficiency of the shell component.

In some embodiments, the nick is a groove extending along a non-closed track. The pressure relief region can burst open in a flip-over manner. After bursting open, the pressure relief region is eventually connected to other regions of the shell component, thereby reducing the risk of splashing when the pressure relief region bursts open.

In some embodiments, the nick is an arcuate groove. The arcuate groove is simple in structure and easy to mold. During the pressure relief, the pressure relief region can rupture quickly along the arcuate groove to burst the pressure relief region open quickly.

In some embodiments, the nick is a groove extending along a closed track. During the pressure relief, the shell component can rupture along the nick, and enable the pressure relief region to burst open in a fall-off manner, thereby increasing the pressure relief area of the shell component, and increasing the pressure relief rate of the shell component.

In some embodiments, the nick is an annular groove. The annular groove is simple in structure and easy to mold. During the pressure relief, the shell component can rupture quickly along the annular groove, and make the pressure relief region burst open quickly.

In some embodiments, an area of the pressure relief region is D, satisfying: 90 mm² ≤ D ≤ 1500 mm². If D is unduly small, the pressure relief area of the shell component is relatively small, and the timeliness of pressure relief is relatively low in a case of thermal runaway of the battery cell. If D is unduly large, the impact resistance of the pressure relief region is relatively low, and the deformation of the stressed pressure relief region increases. The fragile region is prone to be broken when the battery cell is in normal use, thereby impairing the service life of the battery cell. Therefore, controlling D to fall within 90 mm² ≤ D ≤ 1500 mm² can increase the service life of the battery cell and improve safety of the battery cell.

In some embodiments, 150 mm² ≤ D ≤ 1200 mm².

In some embodiments, 200 mm² ≤ D ≤ 1000 mm².

In some embodiments, 250 mm² ≤ D ≤ 800 mm².

In some embodiments, the shell component includes a first surface and a second surface disposed opposite to each other. The groove portion is recessed from the first surface toward the second surface. The groove portion forms an outer edge on the first surface. A region at a distance beyond a preset distance from the outer edge on the shell component is the non-fragile region. In this way, the non-fragile region is less susceptible to impact during molding of the groove portion, and the grains in the non-fragile region are more uniform.

In some embodiments, the preset distance is L, satisfying: L = 5 mm.

In some embodiments, the shell component further includes a transition region. The transition region connects the fragile region and the non-fragile region. An average grain size of the transition region is S₃, satisfying: S₃ ≤ S₂. The transition region serves to connect the fragile region and the non-fragile region, and enables the fragile region and the non-fragile region to be formed in one piece.

In some embodiments, the shell component is an end cap. The end cap is configured to seal an opening of a housing. The housing is configured to accommodate an electrode assembly. In this way, the end cap serves a function of pressure relief to ensure the safety of the battery cell.

In some embodiments, the shell component is a housing. An opening is created on the housing. The housing is configured to accommodate an electrode assembly. In this way, the housing serves a function of pressure relief to ensure the safety of the battery cell.

In some embodiments, the housing includes a plurality of wall portions formed in one piece. The plurality of wall portions jointly define an internal space of the housing. The groove portion is disposed on at least one of the wall portions. The plurality of wall portions are formed in one piece so that the wall portion containing the groove portion is more reliable.

In some embodiments, the plurality of wall portions include a bottom wall and a plurality of sidewalls disposed around the bottom wall. The opening is formed at an end opposite to the bottom wall on the housing. The groove portion is disposed on the bottom wall; and/or the groove portion is disposed on at least one of the sidewalls.

In some embodiments, the housing is a cuboid. This shape is suitable for a prismatic battery cell, and can meet the high-capacity requirement of the battery cell.

In some embodiments, the shell component is made of a material including an aluminum alloy. The shell component made of an aluminum alloy is lightweight, highly ductile, and easy to mold.

In some embodiments, the aluminum alloy includes the following constituents at the following mass percent: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%. This type of aluminum alloy is of lower hardness and more moldable, thereby reducing the difficulty of molding the groove portion, improving the molding precision of the groove portion, and improving the consistency of pressure relief of the shell component.

In some embodiments, the aluminum alloy includes the following constituents at the following mass percent: aluminum ≥ 96.7%, 0.05% ≤ copper ≤ 0.2%, iron ≤ 0.7%, manganese ≤ 1.5%, silicon ≤ 0.6%, zinc ≤ 0.1%, a mass percent of each of other individual elements ≤ 0.05%, and a total mass percent of other elements ≤ 0.15%. The shell component made of this aluminum alloy is of higher hardness and high strength, and high resistance to damage.

According to a second aspect, an embodiment of this application provides a battery cell, including the shell component provided in any one of the embodiments of the first aspect.

In some embodiments, the battery cell further includes a housing. An opening is created on the housing. The housing is configured to accommodate an electrode assembly. The shell component is an end cap, and the end cap is configured to seal the opening.

In some embodiments, the shell component is a housing. An opening is created on the housing. The housing is configured to accommodate an electrode assembly. The battery cell further includes an end cap. The end cap is configured to seal the opening.

According to a third aspect, an embodiment of this application provides a battery, including the battery cell provided in any one of the embodiments of the second aspect.

In some embodiments, the fragile region is located at a lower part of the battery cell. During the use of the battery, the fragile region is subjected to a relatively large force from the gravity of the electrode assembly, electrolyte solution, and the like inside the battery cell. The fragile region and the non-fragile region are formed in one piece, thereby being of high structural strength and higher reliability, and in turn, increasing the service life of the battery cell.

In some embodiments, the battery cell includes a housing. The housing is configured to accommodate an electrode assembly. The housing includes a bottom wall and a plurality of sidewalls disposed around the bottom wall. The bottom wall and the sidewalls are formed in one piece. An opening is formed at an end opposite to the bottom wall on the housing. The fragile region is located on the bottom wall.

In some embodiments, the battery cell includes an end cap. The end cap is configured to seal an opening of a housing. The housing is configured to accommodate an electrode assembly. The fragile region is located on the end cap.

According to a fourth aspect, an embodiment of this application provides an electrical device, including the battery provided in any one of the embodiments of the third aspect.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of a shell component according to some embodiments of this application;
FIG. 5 is a cross-sectional view of the shell component shown in FIG. 4 sectioned along a C-C line;
FIG. 6 is a (schematic) crystal grain map of the shell component shown in FIG. 5;
FIG. 7 is a close-up view of a part E of the shell component shown in FIG. 5;
FIG. 8 is a close-up view of a shell component according to some other embodiments of this application;
FIG. 9 is a schematic structural diagram of a shell component according to still some other embodiments of this application (showing one level of nick);
FIG. 10 is a cross-sectional view of the shell component shown in FIG. 9 sectioned along an E-E line;
FIG. 11 is a schematic structural diagram of a shell component according to yet some other embodiments of this application (showing one level of nick);
FIG. 12 is a cross-sectional view of the shell component shown in FIG. 11 sectioned along an F-F line;
FIG. 13 is a schematic structural diagram of a shell component according to some other embodiments of this application (showing one level of nick);
FIG. 14 is a cross-sectional view of the shell component shown in FIG. 13 sectioned along a G-G line;
FIG. 15 is a schematic structural diagram of a shell component according to still some other embodiments of this application (showing two levels of nicks);
FIG. 16 is a cross-sectional view of the shell component shown in FIG. 15 sectioned along a K-K line;
FIG. 17 is a schematic structural diagram of a shell component according to yet some other embodiments of this application (showing two levels of nicks);
FIG. 18 is a cross-sectional view of the shell component shown in FIG. 17 sectioned along an M-M line;
FIG. 19 is a schematic structural diagram of a shell component according to some other embodiments of this application (showing two levels of nicks);
FIG. 20 is a cross-sectional view of the shell component shown in FIG. 19 sectioned along an N-N line;
FIG. 21 is an axonometric drawing of a shell component according to some embodiments of this application;
FIG. 22 is a schematic structural diagram of the shell component shown in FIG. 21 (showing one level of nick and one level of countersink);
FIG. 23 is a cross-sectional view of the shell component shown in FIG. 22 sectioned along an O-O line;
FIG. 24 is a schematic structural diagram of a shell component according to yet some other embodiments of this application (showing one level of nick and one level of countersink);
FIG. 25 is a cross-sectional view of the shell component shown in FIG. 24 sectioned along a P-P line;
FIG. 26 is a schematic structural diagram of a shell component according to some other embodiments of this application (showing one level of nick and one level of countersink);
FIG. 27 is a cross-sectional view of the shell component shown in FIG. 26 sectioned along a Q-Q line;
FIG. 28 is a schematic structural diagram of a shell component according to some embodiments of this application (showing one level of nick and two levels of countersinks);
FIG. 29 is a cross-sectional view of the shell component shown in FIG. 28 sectioned along an R-R line;
FIG. 30 is a schematic structural diagram of a shell component according to yet some other embodiments of this application (showing one level of nick and two levels of countersinks);
FIG. 31 is a cross-sectional view of the shell component shown in FIG. 30 sectioned along an S-S line;
FIG. 32 is a schematic structural diagram of a shell component according to some other embodiments of this application (showing one level of nick and two levels of countersinks);
FIG. 33 is a cross-sectional view of the shell component shown in FIG. 32 sectioned along a T-T line;
FIG. 34 is a schematic structural diagram of a shell component according to some embodiments of this application (showing one level of nick that is V-shaped);
FIG. 35 is a schematic structural diagram of a shell component according to some other embodiments of this application;
FIG. 36 is a (schematic) crystal grain map of a shell component according to some other embodiments of this application;
FIG. 37 is a schematic structural diagram of an end cap according to some embodiments of this application;
FIG. 38 is a schematic structural diagram of a housing according to some embodiments of this application;
FIG. 39 is a schematic structural diagram of a housing according to some other embodiments of this application; and
FIG. 40 is a schematic structural diagram of a battery cell according to some embodiments of this application.

List of reference numerals: 1-shell; 11-end cap; 12-housing; 121-wall portion; 121a-sidewall; 121b-bottom wall; 2-electrode assembly; 21-positive tab; 22-negative tab; 3-positive electrode terminal; 4-negative electrode terminal; 5-shell component; 51-non-fragile region; 511-inner edge; 52-fragile region; 53-groove portion; 531-bottom face of groove portion; 532-nick; 532a-outermost level of nick; 532b-innermost level of nick; 5321-first nick section; 5322-second nick section; 5323-third nick section; 533-countersink; 533a-outermost level of countersink; 533b-innermost level of countersink; 5331-bottom wall of countersink; 534-outer edge; 54-first surface; 55-second surface; 56-pressure relief region; 57-transition region; 10-battery cell; 20-box; 201-first part; 202-second part; 100-battery; 200-controller; 300-motor; 1000-vehicle; Y-midplane.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In an embodiment of this application, a battery cell may be a secondary battery. The secondary battery is a battery cell that is reusable through activation of an active material in the battery cell by charging the battery cell that is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. The specific type of the battery cell is not limited herein.

The battery mentioned in an embodiment of this application means a unitary physical module that includes one or more battery cells to provide a higher voltage and a higher capacity. If there are a plurality of battery cells, the plurality of battery cells are connected in series, parallel, or series-and-parallel pattern by a busbar component.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or battery module is accommodated in the box.

In some embodiments, the box may serve as a part of a chassis structure of a vehicle. For example, a part of the box may become at least a part of a floor panel of the vehicle, or, a part of the box may become at least a part of a crossbeam and a vertical beam of the vehicle.

In some embodiments, the battery may be an energy storage device. Energy storage devices include an energy storage container, an energy storage cabinet, and the like.

The development of the battery technology needs to allow for a plurality of design factors, including performance parameters such as energy density, cycle life, discharge capacity, charge rate, and discharge rate, and also needs to ensure safety of the battery.

In a battery cell, to ensure safety of the battery cell, a pressure relief mechanism may be disposed on a shell of the battery cell. When the battery cell is thermally runaway, the pressure inside the battery cell can be relieved through the pressure relief mechanism to improve the safety of the battery cell.

For a general battery cell, the pressure relief mechanism is fixed to the shell by welding. Using an example in which the pressure relief mechanism is a rupture disc disposed on an end cap of the shell, when the battery cell is thermally runaway, the rupture disc is broken to expel the emissions in the battery cell and achieve the purpose of relieving the pressure inside the battery cell. Because the pressure relief mechanism is welded to the shell, cracks may occur at the weld position during long-term use of the battery cell, thereby reducing the strength of the weld position. The weld position is prone to be broken when the pressure inside the battery cell does not reach the burst pressure of the pressure relief mechanism, thereby resulting in failure of the pressure relief mechanism. The reliability of the pressure relief mechanism is relatively low.

To improve the reliability of the pressure relief mechanism, the inventor hereof has found through research that the pressure relief mechanism and the shell may be formed in one piece. That is, a part of the shell is used as the pressure relief mechanism. For example, a local part of the end cap is weakened to be of lower strength and form a fragile region, thereby forming a one-piece pressure relief mechanism, and in turn, effectively improving the reliability of the pressure relief mechanism.

The inventor hereof notes that, after the one-piece pressure relief mechanism is formed on the shell, the mechanical properties of the fragile region of the shell are poor. When the battery cell is in normal use, fatigue damage is prone to occur in the fragile region due to long-term changes in the internal pressure of the battery cell, thereby impairing the service life of the battery cell.

In view of the above situation, an embodiment of this application provides a shell component. By disposing a groove portion on the shell component, a non-fragile region and a fragile region formed in one piece are formed. The non-fragile region is formed around the groove portion. The fragile region is formed at a bottom of the groove portion. A hardness of the fragile region is H₁, and a hardness of the non-fragile region is H₂, satisfying: H₁ > H₂.

In such a shell component, the hardness of the fragile region is greater than the hardness of the non-fragile region, thereby increasing the hardness of the fragile region, and in turn, increasing strength of the fragile region, reducing the risk that the fragile region is broken when the battery cell is in normal use, and effectively increasing the service life of the battery cell.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

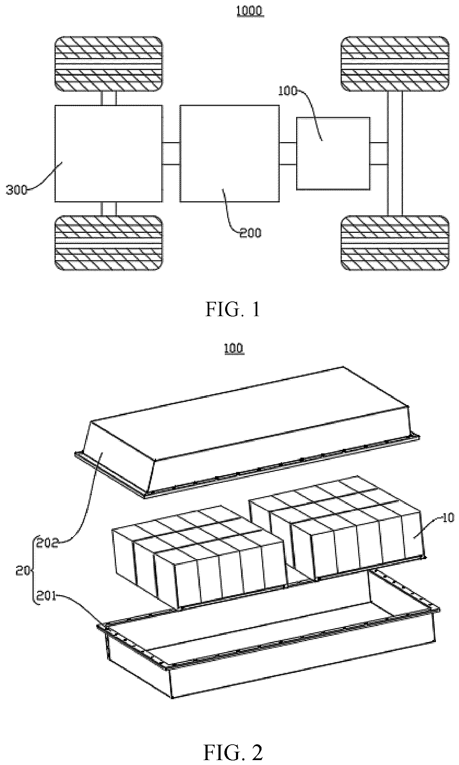

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a battery cell 10 and a box 20. The box 20 is configured to accommodate the battery cell 10.

The box 20 is a component configured to accommodate the battery cell 10. The box 20 provides an accommodation space for the battery cell 10. The box 20 may be in various structures. In some embodiments, the box 20 may include a first part 201 and a second part 202. The first part 201 and the second part 202 fit and cover each other to define the accommodation space configured to accommodate the battery cell 10. The first part 201 and the second part 202 may be in various shapes, such as a cuboid or cylinder. The first part 201 may be a hollow structure opened up at one side. The second part 202 may also be a hollow structure opened up at one side. The open-up side of the second part 202 fits and covers the open-up side of the first part 201 to form the box 20 that provides the accommodation space. Alternatively, the first part 201 is a hollow structure opened up at one side, and the second part 202 assumes a plate-shaped structure. The second part 202 fits and covers the open-up side of the first part 201 to form the box 20 that provides the accommodation space. As an example, the battery cell 10 may be a cylindrical battery cell, a prismatic battery cell, a pouch-type battery cell, or a battery cell 10 of another shape. The prismatic battery cells include a square-shell battery cell, a blade battery cell, and a polygonal prism battery. An example of the polygonal prism battery is hexagonal prism battery. The type of the battery cell is not particularly limited herein.

There may be one or more battery cells 10 in the battery 100. If there are a plurality of battery cells 10, the plurality of battery cells 10 may be connected in series, parallel, or series-and-parallel pattern. The series-and-parallel pattern means a combination of series connection and parallel connection of the plurality of battery cells 10. The plurality of battery cells 10 are connected in series, parallel, or series-and-parallel pattern to form a battery module first, and then a plurality of battery modules are connected in series, parallel, or series-and-parallel pattern to form an entirety that is to be accommodated in the box 20. Alternatively, all battery cells 10 are directly connected in series, parallel, or series-and-parallel pattern, and then the entirety of all battery cells 10 is accommodated in the box 20.

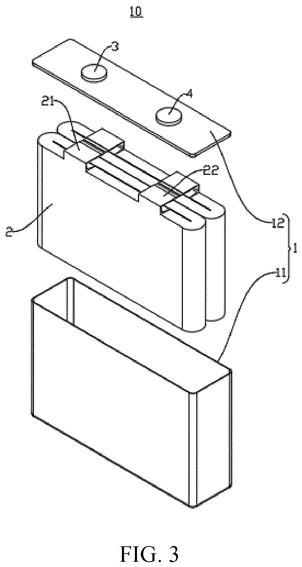

Referring to FIG. 3, FIG. 3 is an exploded view of a battery cell 10 according to some embodiments of this application. The battery cell 10 may include a shell 1 and an electrode assembly 2.

The shell 1 is configured to accommodate components such as the electrode assembly 2 and an electrolyte. The shell 1 may be a steel shell, an aluminum shell, a plastic shell (for example, polypropylene), a composite metal shell (for example, a copper-aluminum composite shell), or an aluminum laminated film. As an example, the shell 1 may include a housing 12 and an end cap 11.

The housing 12 is a hollow structure opened at one end, or, the housing 12 is a hollow structure opened at two opposite ends. The housing 12 may be made of a variety of materials such as copper, iron, aluminum, steel, or an aluminum alloy.

The end cap 11 is a component that seals the opening of the housing 12 to isolate the internal environment of the battery cell 10 from the external environment. The end cap 11 and the housing 12 jointly define an accommodation space configured to accommodate the electrode assembly 2, an electrolytic solution, and other components. The end cap 11 may be connected to the housing 12 by welding or seaming, so as to seal the opening of the housing 12. The shape of the end cap 11 may fit the shape of the shell 1. For example, the housing 12 is a cuboidal structure, and the end cap 11 is a rectangular plate structure that fits the shell 1. For another example, the shell 12 is a cylinder, and the end cap 11 is a circular plate structure that fits the housing 12. The end cap 11 may be made of a variety of materials such as copper, iron, aluminum, steel, or an aluminum alloy.

One or two end caps 11 may exist in the battery cell 10. In an embodiment in which the housing 12 is a hollow structure opened at both ends, two end caps 11 may be disposed correspondingly. The two end caps 11 seals the two openings of the housing 12 respectively. The two end caps 11 and the housing 12 jointly define an accommodation space. In an embodiment in which the housing 12 is a hollow structure opened at one end, one end cap 11 may be disposed correspondingly. The end cap 11 seals the opening of the housing 12 at one end. One end cap 11 and the housing 12 jointly define an accommodation space.

The electrode assembly 2 includes a positive electrode, a negative electrode, and a separator piece. During charge and discharge of a battery cell 10, active ions (such as lithium ions) are shuttled between the positive electrode and the negative electrode by intercalation and deintercalation. Disposed between the positive electrode and the negative electrode, the separator piece serves to prevent a short circuit between the positive electrode and the negative electrode and allow passage of the active ions.

In some embodiments, the positive electrode may be a positive electrode plate. The positive electrode plate may include a positive current collector and a positive active material disposed on at least one surface of the positive current collector.

As an example, the positive current collector includes two surfaces opposite to each other in a thickness direction of the current collector. The positive active material is disposed on any one or both of the two opposite surfaces of the positive current collector.

As an example, the positive current collector may be metal foil or a composite current collector. For example, the metal foil may be made of aluminum or stainless steel with a silver finish, or stainless steel, copper, aluminum, nickel, carbon electrode, carbon, nickel, titanium, or the like. The composite current collector may include a polymer material substrate and a metal layer. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene.

As an example, the positive active material may include at least one of the following materials: lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof.

In some embodiments, the positive electrode may be a foamed metal. The foamed metal may be foamed nickel, foamed copper, foamed aluminum, foamed alloy, foamed carbon, or the like. When the foamed metal is used as the positive electrode, a positive active material may be disposed on the surface of the foamed metal or not. As an example, a lithium source material, a potassium metal, or a sodium metal may further fill and/or deposit within the foamed metal. The lithium source material is a lithium metal and/or a lithium-rich material.

In some embodiments, the negative electrode may be a negative electrode plate. The negative electrode plate may include a negative current collector and a negative active material disposed on at least one surface of the negative current collector.

For example, the negative current collector includes two surfaces opposite to each other in a thickness direction thereof. The negative active material is disposed on either or both of the two opposite surfaces of the negative current collector.

As an example, the negative current collector may be metal foil or a composite current collector. For example, the metal foil may be made of aluminum or stainless steel with a silver finish, or stainless steel, copper, aluminum, nickel, carbon electrode, carbon, nickel, titanium, or the like. The composite current collector may include a polymer material substrate and a metal layer. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene.

As an example, the negative active material may be a negative active material known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode may be a foamed metal. The foamed metal may be foamed nickel, foamed copper, foamed aluminum, foamed alloy, foamed carbon, or the like. When the foamed metal is used as the negative electrode plate, a negative active material may be disposed on the surface of the foamed metal or not.

As an example, a lithium source material, a potassium metal, or a sodium metal may further fill and/or deposit within the negative current collector. The lithium source material is a lithium metal and/or a lithium-rich material.

In some embodiments, the material of the positive current collector may be aluminum, and the material of the negative current collector may be copper.

In some embodiments, the electrode assembly 2 further includes a separator piece. The separator piece is disposed between the positive electrode and the negative electrode.

In some embodiments, the separator piece is a separator. The type of the separator is not particularly limited in this application, and may be any well-known porous separator that is highly stable both chemically and mechanically.

As an example, the separator may be mainly made of a material that is at least one selected from glass fiber, non-woven fabric, polyethylene, polypropylene, polyvinylidene difluoride, or ceramics. The separator may be a single-layer film or a multilayer composite film, without being particularly limited. When the separator is a multilayer composite film, materials in different layers may be identical or different, without being particularly limited. The separator piece may be a separate component located between the positive electrode and the negative electrode, or may be attached to a surface of the positive or negative electrode.

In some embodiments, the separator piece is a solid-state electrolyte. The solid-state electrolyte is disposed between the positive electrode and the negative electrode, and serves functions of transmitting ions and isolating the positive electrode from the negative electrode at the same time.

In some embodiments, the battery cell 10 further include an electrolyte. The electrolyte serves to conduct ions between the positive electrode and the negative electrode. The type of the electrolyte is not particularly limited in this application, and may be selected as required. The electrolyte may be in a liquid state, gel state, or solid state.

The liquid-state electrolyte includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane. The solvent is optionally an ether solvent. The ether solvent may include one or more of ethylene glycol dimethyl ether, ethylene glycol diethyl ether, diglyme, triglyme, tetraglyme, 1,3-dioxolane, tetrahydrofuran, methyltetrahydrofuran, diphenyl ether, or crown ether.

The gel electrolyte includes a framework using a polymer as an electrolyte, paired with ionic liquid-lithium salt.

The solid-state electrolytes include a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene difluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superconducting ion conductor, garnet, amorphous LiPON film), a sulfide solid electrolyte (a crystalline lithium superionic conductor (lithium germanium phosphorus sulfide, silver germanium sulfide) or an amorphous sulfide), a halide solid electrolyte, a nitride solid electrolyte, or a hydride solid electrolyte.

As an example, the composite solid-state electrolyte is formed by adding an inorganic solid-state electrolyte filler into a polymer solid electrolyte.

In some embodiments, the electrode assembly 2 is a jelly-roll structure. The positive electrode plate and the negative electrode plate are wound into a jelly-roll structure.

In some embodiments, the electrode assembly 2 is a stacked structure.

As an example, a plurality of positive electrode plates and a plurality of negative electrode plates are disposed. The plurality of positive electrode plates and the plurality of negative electrode plates are stacked alternately.

As an example, a plurality of positive electrode plates may be disposed, and the negative electrode plate is folded to form a plurality of stacked fold sections. One positive electrode plate is sandwiched between adjacent fold sections.

As an example, both the positive electrode plate and the negative electrode plate are folded to form a plurality of stacked fold sections.

As an example, a plurality of separator pieces may be disposed, and each of the separator pieces may be disposed between any positive electrode plate and negative electrode plate that are adjacent to each other.

As an example, the separator pieces may be disposed continuously, and each separator piece may be disposed in a folded or wound manner between any positive electrode plate and negative electrode plate that are adjacent to each other.

In some embodiments, the shape of the electrode assembly 2 may be a cylindrical shape, a flat shape, a polygonal prism shape, or the like.

In some embodiments, a tab is disposed on the electrode assembly 2. The tab can lead a current from the electrode assembly 2. The tab includes a positive tab 21 and a negative tab 22.

The battery cell 10 may further include electrode terminals. The electrode terminals may be disposed on the shell 1. The electrode terminals are configured to be electrically connected to the tabs of the electrode assembly 2, so as to output electrical energy of the battery cell 10. The electrode terminals may be connected to the tabs directly. For example, the electrode terminals may be welded to the tabs directly. Alternatively, the electrode terminals may be connected to the tabs indirectly. For example, the electrode terminals may be connected to the tabs indirectly by a current collection component. The current collection component may be a metal conductor such as copper, iron, aluminum, steel, or aluminum alloy.

As shown in FIG. 3, using an example in which the housing 12 is a hollow structure opened at one end, two electrode terminals may be disposed on the end cap 11. The two electrode terminals are a positive electrode terminal 3 and a negative electrode terminal 4 respectively. The positive electrode terminal 3 is electrically connected to the positive tab 21, and the negative electrode terminal 4 is electrically connected to the negative tab 22.

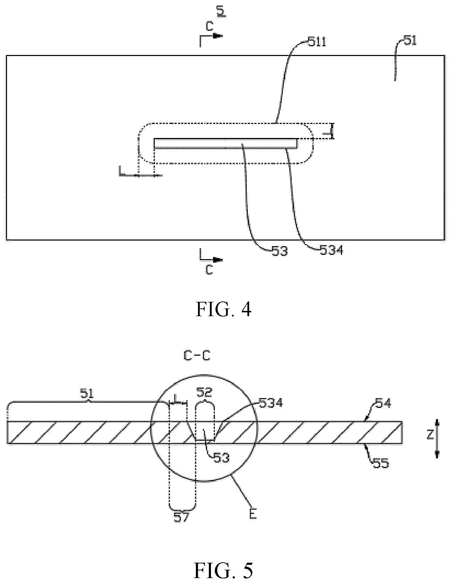

Referring to FIG. 4 and FIG. 5, FIG. 4 is a schematic structural diagram of a shell component 5 according to some embodiments of this application; and FIG. 5 is a cross-sectional view of the shell component 5 shown in FIG. 4 sectioned along a C-C line. An embodiment of this application provides a shell component 5, used for a battery cell 10, and including a non-fragile region 51 and a fragile region 52 formed in one piece. A groove portion 53 is disposed on the shell component 5. The non-fragile region 51 is formed around the groove portion 53. The fragile region 52 is formed at a bottom of the groove portion 53. The fragile region 52 is configured to be broken when the battery cell 10 is relieved of an internal pressure. A hardness of the fragile region 52 is H₁, and a hardness of the non-fragile region 51 is H₂, satisfying: H₁ > H₂.

The shell component 5 is a component capable of working with other components to jointly accommodate an electrode assembly 2. The shell component 5 is a part of the shell 1. Either an end cap 11 of the housing 1 is the shell component 5 or a housing 12 of the shell 1 is the shell component 5. The shell component 5 may be made of a metal material, such as copper, iron, aluminum, steel, or aluminum alloy. The shell component 5 may be an aluminum laminated film.

The fragile region 52 is a part of the shell component 5, the part being more fragile than other regions. When the pressure inside the battery cell 10 reaches a threshold, the fragile region 52 of the shell component 5 can be broken to relieve the pressure inside the battery cell 10. The fragile region 52 may be broken by rupturing, falling off, or other means. For example, when the pressure inside the battery cell 10 reaches the threshold, the fragile region 52 is ruptured under the action of the emissions (such as gas and electrolyte solution) inside the battery cell 10, thereby enabling the emissions inside the battery cell 10 to be expelled smoothly. The fragile region 52 may be in various shapes such as rectangular, circular, elliptical, annular, arcuate, U-shaped, H-shaped, or the like. The thickness of the fragile region 52 may be uniform or nonuniform.

The fragile region 52 is formed at the bottom of the groove portion 53. The groove portion 53 may be molded diversely. For example, the groove portion 53 may be molded by stamping, milling, laser etching, or other means, so as to enable the fragile region 52 and the non-fragile region 51 to be formed in one piece. After the groove portion 53 is molded on the shell component 5 by stamping, the region at which the groove portion 53 is disposed on the shell component 5 is thinned, and forms the fragile region 52 correspondingly. The groove portion 53 may be a one-level groove. The lateral faces of the groove portion 53 are continuous along the depth direction of the groove portion 53. For example, the groove portion 53 is a groove in which an inner space is cuboidal, column-shaped, or the like. Alternatively, the groove portion 53 may be a multi-level groove. The multiple levels of grooves are arranged along the depth direction of the groove portion 53. In two adjacent levels of grooves, the inner level of groove (at a deeper position) is disposed on the bottom face of the outer level of groove (at a shallower position). For example, the groove portion 53 is a stepped groove. During molding, the multiple levels of grooves may be molded by stamping level by level along the depth direction of the groove portion 53. The fragile region 52 is formed at the bottom of the (innermost) level of groove at the deepest position in the multiple levels of grooves.

The non-fragile region 51 is formed around the groove portion 53. The strength of the non-fragile region 51 is greater than the strength of the fragile region 52. The fragile region 52 is more easily breakable than the non-fragile region 51. When the groove portion 53 is formed on the shell component 5 by stamping, the non-fragile region 51 may be an unstamped part of the shell component 5. The thickness of the non-fragile region 51 may be uniform or nonuniform.

The hardness of the fragile region 52 and the hardness of the non-fragile region 51 are expressed by a Hardness Brinell Wolfram (HBW) number. The HBW number may be determined by referring to the measurement principles set forth in GB/T 23.1-2018. In an actual measurement process, the hardness of the fragile region 52 may be obtained by performing measurement on the inner or outer surface of the fragile region 52 in the thickness direction. The hardness of the non-fragile region 51 may be obtained by performing measurement on the inner or outer surface of the non-fragile region 51 in the thickness direction. Using an example in which the shell component 5 is the end cap 11 of the battery cell 10, the hardness of the fragile region 52 may be measured on an outer surface of the fragile region 52, the outer surface being oriented back from the interior of the battery cell 10; or, the hardness of the fragile region 52 may be measured on an inner surface of the fragile region 52, the inner surface being oriented toward the interior of the battery cell 10. The hardness of the non-fragile region 51 may be measured on an outer surface of the non-fragile region 51, the outer surface being oriented back from the interior of the battery cell 10; or, the hardness of the non-fragile region 51 may be measured on an inner surface of the non-fragile region 51, the inner surface being oriented toward the interior of the battery cell 10.

In FIG. 5, the thickness direction of the fragile region 52 is identical to the thickness direction of the non-fragile region 51, and is the Z-direction.

In an embodiment of this application, the fragile region 52 and the non-fragile region 51 are formed in one piece, so that the reliability of the shell component 5 is higher. The hardness of the fragile region 52 is greater than the hardness of the non-fragile region 51, thereby increasing the hardness of the fragile region 52, and in turn, increasing strength of the fragile region 52, reducing the risk that the fragile region 52 is broken when the battery cell 10 is in normal use, and effectively increasing the service life of the battery cell 10.

In some embodiments, H₁/H₂ ≤ 5.

The H₁/H₂ ratio may be any one of 1.1, 1.5, 2, 2.5, 3, 3.5, 3.6, 4, 4.5, 5, or a value falling within a range formed by any two thereof.

If the H₁/H₂ ratio is greater than 5, it is possible that the fragile region 52 is unduly hard and the fragile region 52 is difficult to be broken when the battery cell 10 is thermally runaway.

If the H₁/H₂ ratio is unduly high, it is possible that the fragile region 52 is difficult to be broken when the battery cell 10 is thermally runaway.

Therefore, the H₁/H₂ ratio is set to be less than or equal to 5, thereby reducing the risk that the fragile region 52 is unable to be broken in time when the battery cell 10 is thermally runaway, and improving the safety of the battery cell 10.

In some embodiments, H₁/H₂ ≤ 2.5.

The H₁/H₂ ratio may be any one of 1.1, 1.11, 1.12, 1.2, 1.25, 1.3, 1.4, 1.5, 1.6, 1.7, 1.71, 1.72, 1.8, 1.9, 2, 2.1, 2.2, 2.3, 2.4, 2.5, or a value falling within a range formed by any two thereof.

In these embodiments, the H₁/H₂ ratio is less than or equal to 2.5, thereby further reducing the risk that the fragile region 52 is unable to be broken in time when the battery cell 10 is thermally runaway.

In some embodiments, 5 HBW ≤ H₁ ≤ 200 HBW.

H₁ may be any one of 5 HBW, 6 HBW, 8 HBW, 10 HBW, 15 HBW, 19 HBW, 20 HBW, 30 HBW, 32 HBW, 44 HBW, 50 HBW, 60 HBW, 70 HBW, 80 HBW, 90 HBW, 100 HBW, 110 HBW, 120 HBW, 130 HBW, 140 HBW, 150 HBW, 160 HBW, 170 HBW, 180 HBW, 190 HBW, 200 HBW, or a value falling within a range formed by any two thereof.

In some embodiments, 5 HBW ≤ H₂ ≤ 150 HBW.

H₂ may be any one of 5 HBW, 8 HBW, 9 HBW, 9.5 HBW, 10 HBW, 15 HBW, 16 HBW, 19 HBW, 20 HBW, 30 HBW, 40 HBW, 50 HBW, 52 HBW, 52.5 HBW, 53 HBW, 60 HBW, 70 HBW, 80 HBW, 90 HBW, 100 HBW, 110 HBW, 120 HBW, 130 HBW, 140 HBW, 150 HBW, or a value falling within a range formed by any two thereof.

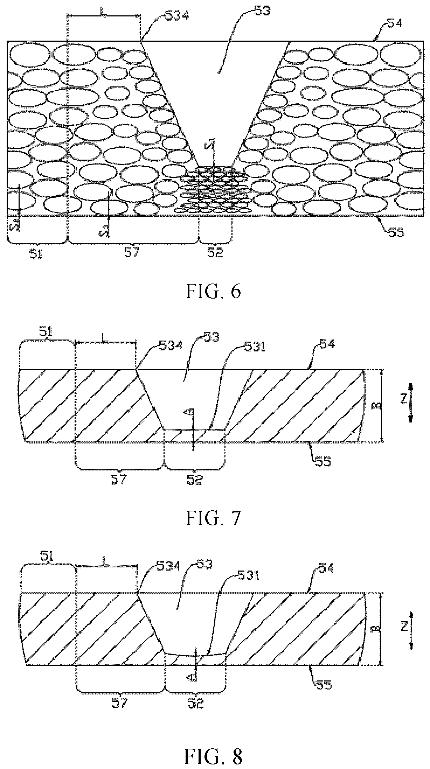

In some embodiments, referring to FIG. 6, FIG. 6 is a (schematic) crystal grain map of the shell component 5 shown in FIG. 5. An average grain size of the fragile region 52 is S₁, and an average grain size of the non-fragile region 51 is S₂, satisfying: S₁/S₂ ≤ 0.9.

The method for measuring the average grain size may be an intercept method set forth in GB 6394-2017, details of which are omitted herein. In measuring the average grain size of the fragile region 52, the measurement may be made along the thickness direction of the fragile region 52. In measuring the average grain size of the non-fragile region 51, the measurement may be made along the thickness direction of the non-fragile region 51.

The S₁/S₂ ratio may be any one of 0.01, 0.03, 0.04, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, or a value falling within a range formed by any two thereof.

In these embodiments, S₁/S₂ ≤ 0.9. The average grain size of the fragile region 52 differs greatly from the average grain size of the non-fragile region 51, thereby reducing the average grain size of the fragile region 52, improving the mechanical properties of the material in the fragile region 52, improving the toughness and fatigue resistance of the fragile region 52, reducing the risk that the fragile region 52 is broken when the battery cell 10 is in normal use, and increasing the service life of the battery cell 10.

In some embodiments, S₁/S₂ ≥ 0.05.

The inventor has noticed that, when the S₁/S₂ ratio is less than 0.05, the difficulty of molding the fragile region 52 increases, the strength of the fragile region 52 is unduly high, the fragile region 52 is more difficult to be broken when the battery cell 10 is thermally runaway, and the pressure relief is prone to be delayed.

Therefore, the S₁/S₂ ratio is set to be greater than or equal to 0.05, thereby reducing the difficulty of molding the fragile region 52, and improving the timeliness of pressure relief in a case of thermal runaway of the battery cell 10.

In some embodiments, 0.1 ≤ S₁/S₂ ≤ 0.5.

The S₁/S₂ ratio may be any one of 0.1, 0.12, 0.15, 0.17, 0.2, 0.22, 0.25, 0.27, 0.3, 0.32, 0.35, 0.37, 0.4, 0.42, 0.45, 0.47, 0.5, or a value falling within a range formed by any two thereof.

In these embodiments, 0.1 ≤ S₁/S₂ ≤ 0.5, thereby improving the overall performance of the shell component 5, ensuring that the fragile region 52 can be broken in time in a case of thermal runaway of the battery cell 10, and also ensuring that the fragile region 52 is of sufficient strength during normal use of the battery cell 10.

In some embodiments, 0.4 µm ≤ S₁ ≤ 75 µm.

S₁ may be any one of 0.4 µm, 0.5 µm, 1 µm, 2 µm, 3 µm, 4 µm, 5 µm, 10 µm, 15 µm, 16 µm, 20 µm, 25 µm, 28 µm, 30 µm, 35 µm, 36 µm, 40 µm, 45 µm, 49 µm, 50 µm, 55 µm, 56 µm, 60 µm, 65 µm, 70 µm, 72 µm, 75 µm, or a value falling within a range formed by any two thereof.

The inventor has noticed that, when S₁ is greater than 75 µm, the toughness and fatigue resistance of the fragile region 52 are relatively low. When S₁ is less than 0.4 mm, the difficulty of molding the fragile region 52 is relatively high, the strength of the fragile region 52 is unduly high, the fragile region 52 is more difficult to be broken when the battery cell 10 is thermally runaway, and the pressure relief is prone to be delayed.

Therefore, by satisfying 0.4 µm ≤ S₁ ≤ 75 µm, on the one hand, this application reduces the difficulty of molding the fragile region 52, and improves the timeliness of pressure relief in a case of thermal runaway of the battery cell 10; and, on the other hand, this application increases the toughness and fatigue resistance of the fragile region 52, and reduces the risk that the fragile region 52 is broken when the battery cell 10 is in normal use.

In some embodiments, 1 µm ≤ S₁ ≤ 10 µm.

S₁ may be any one of 1 µm, 1.5 µm, 1.6 µm, 1.7 µm, 2 µm, 2.5 µm, 2.6 µm, 3 µm, 3.2 µm, 3.3 µm, 3.5 µm, 3.6 µm, 4 µm, 4.5 µm, 4.6 µm, 5 µm, 5.5 µm, 5.6 µm, 6 µm, 6.5 µm, 6.6 µm, 7 µm, 7.5 µm, 7.6 µm, 8 µm, 8.5 µm, 8.6 µm, 9 µm, 9.5 µm, 9.6 µm, 10 µm, or a value falling within a range formed by any two thereof.

In these embodiments, 1 µm ≤ S₁ ≤ 10 µm, thereby improving the overall performance of the shell component 5, ensuring that the fragile region 52 can be broken in time in a case of thermal runaway of the battery cell 10, and also ensuring that the fragile region 52 is of sufficient strength during normal use of the battery cell 10.

In some embodiments, 10 µm ≤ S₂ ≤ 150 µm.

S₂ may be any one of 10 µm, 15 µm, 20 µm, 25 µm, 30 µm, 32 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, or a value falling within a range formed by any two thereof.

In some embodiments, 30 µm ≤ S₂ ≤ 100 µm.

S₂ may be any one of 30 µm, 32 µm, 35 µm, 37 µm, 40 µm, 42 µm, 45 µm, 47 µm, 50 µm, 52 µm, 55 µm, 57 µm, 60 µm, 62 µm, 65 µm, 67 µm, 70 µm, 72 µm, 75 µm, 77 µm, 80 µm, 82 µm, 85 µm, 87 µm, 90 µm, 92 µm, 95 µm, 97 µm, 100 µm, or a value falling within a range formed by any two thereof.

In some embodiments, a minimum thickness of the fragile region 52 is A, and an average grain size of the fragile region 52 is S₁, satisfying: 1 ≤ A/S₁ ≤ 100.

The A/S₁ ratio may be any one of 1, 1.3, 2, 3, 3.1, 3.2, 4, 5, 10, 15, 20, 21, **22, 23,** 25, 30, 31, 33, 34, 35, 37, 38, 40, 45, 50, 55, 60, 65, 63, 70, 75, 80, 85, 90, 93, 94, 95, 100, or a value falling within a range formed by any two thereof.

When the A/S₁ ratio is less than 1, the number of grain layers in the fragile region 52 is smaller in the thickness direction of the fragile region 52, and the fatigue resistance of the fragile region 52 is unduly low. When the A/S₁ ratio is greater than 100, the number of grain layers in the fragile region 52 is unduly large in the thickness direction of the fragile region 52, and the strength of the fragile region 52 is unduly high, thereby being prone to a risk that the fragile region 52 is not broken in time when the battery cell 10 is thermally runaway.

Therefore, by satisfying 1 ≤ A/S₁ ≤ 100, on the one hand, this application causes the number of grain layers to be relatively large in the thickness direction in the fragile region 52, thereby increasing the fatigue resistance of the fragile region 52, reducing the risk that the fragile region 52 is broken when the battery cell 10 is in normal use; and, on the other hand, this application enables the fragile region 52 to be broken in a more timely manner when the battery cell 10 is thermally runaway, so as to achieve the purpose of timely pressure relief.

In some embodiments, 5 ≤ A/S₁ ≤ 20.

The A/S₁ ratio may be any one of 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, or a value falling within a range formed by any two thereof.

In these embodiments, 5 ≤ A/S₁ ≤ 20, thereby improving the overall performance of the shell component 5, ensuring that the fragile region 52 can be broken in time in a case of thermal runaway of the battery cell 10, and also ensuring that the fragile region 52 is sufficiently fatigue-resistant when the battery cell 10 is in normal use, and in turn, increasing the service life of the battery cell 10.

In some embodiments, a minimum thickness of the fragile region 52 is A, satisfying: 5 HBW/mm ≤ H₁/A ≤ 10000 HBW/mm.

H₁/A may be any one of 5 HBW/mm, 6 HBW/mm, 7 HBW/mm, 20 HBW/mm, 50 HBW/mm, 61 HBW/mm, 62 HBW/mm, 63 HBW/mm, 64 HBW/mm, 65 HBW/mm, 66 HBW/mm, 67 HBW/mm, 75 HBW/mm, 80 HBW/mm, 90 HBW/mm, 100 HBW/mm, 120 HBW/mm, 128 HBW/mm, 150 HBW/mm, 160 HBW/mm, 190 HBW/mm, 500 HBW/mm, 1000 HBW/mm, 1200 HBW/mm, 1750 HBW/mm, 1800 HBW/mm, 2100 HBW /mm, 4000 HBW/mm, 5000 HBW/mm, 8000 HBW/mm, 9000 HBW/mm, 10000 HBW/mm, or a value falling within a range formed by any two thereof.

When the H₁/A ratio is greater than 10000 HBW/mm, the fragile region 52 is relatively thin and hard, thereby causing the fragile region 52 to be very thin and brittle, the fragile region 52 is prone to be broken when the battery cell 10 is in normal use, and the service life of the battery cell 10 is relatively short. When the H₁/A ratio is less than 5 HBW/mm, the fragile region 52 is relatively thick and less hard. When the battery cell 10 is thermally runaway, the fragile region 52 will be stretched and elongated, and the timeliness of pressure relief is relatively low.

In these embodiments, the setting not only takes into consideration the effect exerted by the thickness of the fragile region 52 on the performance of the shell component 5, but also takes into consideration the effect exerted by the hardness of the fragile region 52 on the performance of the shell component 5. By satisfying 5 HBW/mm ≤ H₁/A ≤ 10000 HBW/mm, this application enables sufficient strength of the fragile region 52 when the battery cell 10 is in normal use, and makes the fragile region 52 not prone to be broken by fatigue, thereby increasing the service life of the battery cell 10; and at the same time, enables the shell component 5 to relieve pressure in time through the fragile region 52 when the battery cell 10 is thermally runaway, thereby reducing the risk of explosion of the battery cell 10, and improving the safety of the battery cell 10.

In some embodiments, 190 HBW/mm ≤ H₁/A ≤ 4000 HBW/mm.

H₁/A may be any one of 190 HBW/mm, 200 HBW/mm, 220 HBW/mm, 250 HBW/mm, 280 HBW/mm, 300 HBW/mm, 320 HBW/mm, 350 HBW/mm, 400 HBW/mm, 450 HBW/mm, 500 HBW/mm, 533 HBW/mm, 600 HBW/mm, 700 HBW/mm, 800 HBW/mm, 875 HBW/mm, 1000 HBW/mm, 1200 HBW/mm, 1280 HBW/mm, 1500 HBW/mm, 1600 HBW/mm, 1750 HBW/mm, 1800 HBW/mm, 2000 HBW/mm, 2100 HBW/mm, 2500 HBW/mm, 3000 HBW/mm, 3500 HBW/mm, 4000 HBW/mm, or a value falling within a range formed by any two thereof.

In these embodiments, 190 HBW/mm ≤ H₁/A ≤ 4000 HBW/mm, thereby improving the overall performance of the shell component 5, ensuring that the fragile region 52 can be broken in time in a case of thermal runaway of the battery cell 10, and also ensuring that the fragile region 52 is of sufficient strength during normal use of the battery cell 10. On the premise of ensuring the safety of the battery cell 10, the service life of the battery cell 10 is increased.

In some embodiments, referring to FIG. 7 and FIG. 8, FIG. 7 is a close-up view of a part E of the shell component 5 shown in FIG. 5; and FIG. 8 is a close-up view of a shell component 5 according to some other embodiments of this application. A minimum thickness of the fragile region 52 is A, and a minimum thickness of the non-fragile region 51 is B, satisfying: 0.05 ≤ A/B ≤ 0.95.

The A/B ratio may be any one of 0.05, 0.06, 0.07, 0.08, 0.1, 0.15, 0.2, 0.25, 0.3, 0.35, 0.4, 0.45, 0.5, 0.55, 0.6, 0.65, 0.7, 0.8, 0.85, 0.9, 0.95, or a value falling within a range formed by any two thereof.

The minimum thickness of the fragile region 52 is the thickness of the fragile region 52 at the thinnest position. The minimum thickness of the non-fragile region 51 is the thickness of the non-fragile region 51 at the thinnest position.

As an example, as shown in FIG. 7 and FIG. 8, the shell component 5 includes a first surface 54 and a second surface 55 disposed opposite to each other. The groove portion 53 is recessed from the first surface 54 toward the second surface 55. A part of the shell component 5, which is located between a bottom face 531 of the groove portion and the second surface 55, is the fragile region 52.

The first surface 54 may be disposed in parallel or at a small angle to the second surface 55. If the first surface 54 is disposed at a small angle, such as an angle of 10 degrees or less, to the second surface 55, the minimum distance between the first surface 54 and the second surface 55 is the minimum thickness of the non-fragile region 51. As shown in FIG. 7 and FIG. 8, if the first surface 54 is parallel to the second surface 55, the distance between the first surface 54 and the second surface 55 is the minimum thickness of the non-fragile region 51.

The bottom face 531 of the groove portion may be planar or curved. If the bottom face 531 of the groove portion is planar, the bottom face 531 of the groove portion may be disposed in parallel or at a small angle to the second surface 55. If the bottom face 531 of the groove portion is disposed at a small angle, such as an angle of 10 degrees or less, to the second surface 55, the minimum distance between the bottom face 531 of the groove portion and the second surface 55 is the minimum thickness of the fragile region 52. As shown in FIG. 7, if the bottom face 531 of the groove portion is parallel to the second surface 55, the distance between the bottom face 531 of the groove portion and the second surface 55 is the minimum thickness of the fragile region 52. As shown in FIG. 8, if the bottom face 531 of the groove portion is a curved face, for example, if the bottom face 531 of the groove portion is an arcuate face, the minimum distance between the bottom face 531 of the groove portion and the second surface 55 is the minimum thickness of the fragile region 52.

When the A/B ratio is less than 0.05, it is possible that the strength of the fragile region 52 is insufficient, thereby increasing the probability that the fragile region 52 is ruptured when the battery cell 10 is in normal use. When the A/B ratio is greater than 0.95, it is possible that the fragile region 52 is not broken easily when the battery cell 10 is thermally runaway, and the pressure relief is not timely, thereby increasing the probability of explosion of the battery cell 10.

Therefore, by satisfying 0.05 ≤ A/B ≤ 0.95, this application reduces the probability that the fragile region 52 is broken when the battery cell 10 is in normal use, and reduces the probability of explosion when the battery cell 10 is thermally runaway.

In some embodiments, 0.12 ≤ A/B ≤ 0.8.

The A/B ratio may be any one of 0.12, 0.13, 0.14, 0.15, 0.16, 0.17, 0.2, 0.22, 0.25, 0.27, 0.3, 0.32, 0.35, 0.37, 0.4, 0.42, 0.45, 0.47, 0.5, 0.52, 0.55, 0.57, 0.6, 0.62, 0.65, 0.66, 0.67, 0.7, 0.72, 0.75, 0.77, 0.8, or a value falling within a range formed by any two thereof.

In these embodiments, 0.12 ≤ A/B ≤ 0.8, thereby improving the overall performance of the shell component, ensuring that the fragile region 52 can be broken in time in a case of thermal runaway of the battery cell 10, and also ensuring that the fragile region 52 is of sufficient strength during normal use of the battery cell 10.

In some embodiments, 0.2 ≤ A/B ≤ 0.5.

The A/B ratio may be any one of 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, or a value falling within a range formed by any two thereof.

In these embodiments, 0.2 ≤ A/B ≤ 0.5, thereby further reducing the risk that the fragile region 52 is broken when the battery cell 10 is in normal use, ensuring that the fragile region 52 is broken in time when the battery cell 10 is thermally runaway, and improving timeliness of pressure relief.

In some embodiments, 1 mm ≤ B ≤ 5 mm.

B may be any one of 1 mm, 2 mm, 3 mm, 4 mm, 5 mm, or a value falling within a range formed by any two thereof.

When B is greater than 5 mm, the thickness of the non-fragile region 51 is relatively large, the shell component 5 consumes more material, and the shell component 5 is heavy and less cost-effective. If B is less than 1 mm, the thickness of the non-fragile region 51 is relatively small, and the deformation resistance of the shell component 5 is relatively low.

Therefore, B is controlled to fall within 1 mm ≤ B ≤ 5 mm, so that the shell component 5 is cost-effective and well resistant to deformation.

In some embodiments, 1.2 mm ≤ B ≤ 3.5 mm.

B may be any one of 1.2 mm, 1.25 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, or a value falling within a range formed by any two thereof.

In these embodiments, 1.2 mm ≤ B ≤ 3.5 mm, thereby making the shell component 5 more cost-effective and more resistant to deformation.

In some embodiments, 2 mm ≤ B ≤ 3 mm.

In some embodiments, 0.02 mm ≤ A ≤ 1.6 mm.

A may be any one of 0.02 mm, 0.04 mm, 0.05 mm, 0.06 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.62 mm, 0.63 mm, 0.7 mm, 0.75 mm, 0.8 mm, 0.85 mm, 0.9 mm, 0.95 mm, 1 mm, 1.05 mm, 1.1 mm, 1.15 mm, 1.18 mm, 1.19 mm, 1.2 mm, 1.22 mm, 1.23 mm, 1.25 mm, 1.3 mm, 1.35 mm, 1.4 mm, 1.42 mm, 1.43 mm, 1.45 mm, 1.47 mm, 1.5 mm, 1.55 mm, 1.6 mm, or a value falling within a range formed by any two thereof.

When A is less than 0.02 mm, the fragile region 52 is difficult to mold, and the fragile region 52 is prone to be damaged during molding. When A is greater than 1.6 mm, it is more difficult to break the fragile region 52 when the battery cell 10 is thermally runaway, and the pressure relief is prone to be delayed.

Therefore, A is controlled to fall within 0.02 mm ≤ A ≤ 1.6 mm, thereby reducing the difficulty of molding the pressure relief region 56, and improving the timeliness of pressure relief in a case of thermal runaway of the battery cell 10.

In some embodiments, 0.06 mm ≤ A ≤ 0.4 mm.

A may be any one of 0.06 mm, 0.07 mm, 0.08 mm, 0.1 mm, 0.15 mm, 0.18 mm, 0.2 mm, 0.25 mm, 0.3 mm, 0.35 mm, 0.4 mm, or a value falling within a range formed by any two thereof.

In these embodiments, 0.06 mm ≤ A ≤ 0.4 mm, thereby further reducing the difficulty of molding the pressure relief region 56, and improving the timeliness of pressure relief in a case of thermal runaway of the battery cell 10.

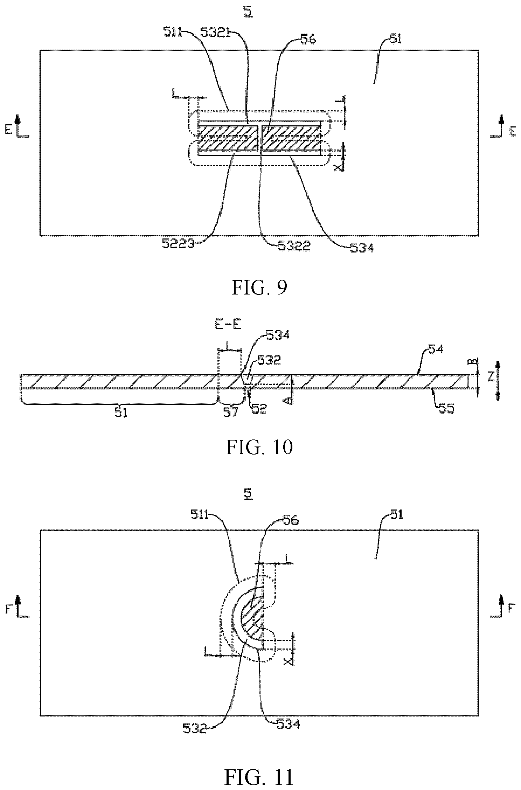

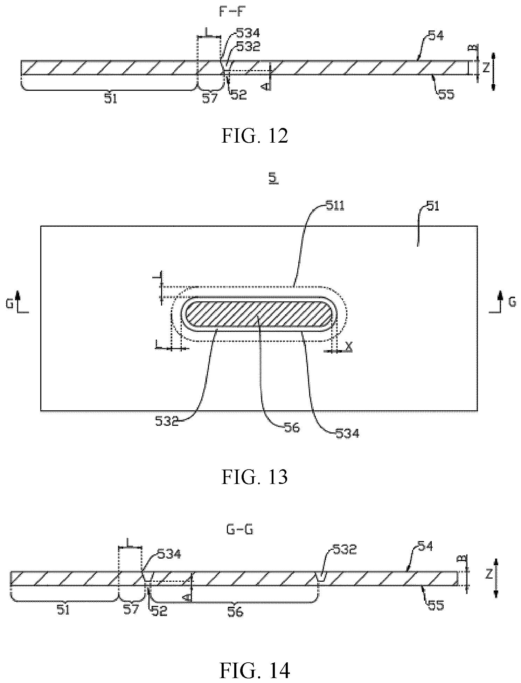

In some embodiments, referring to FIG. 9 to FIG. 14, FIG. 9 is a schematic structural diagram of a shell component 5 according to still some other embodiments of this application (showing one level of nick 532); FIG. 10 is a cross-sectional view of the shell component 5 shown in FIG. 9 sectioned along an E-E line; FIG. 11 is a schematic structural diagram of a shell component 5 according to yet some other embodiments of this application (showing one level of nick 532); FIG. 12 is a cross-sectional view of the shell component 5 shown in FIG. 11 sectioned along an F-F line; FIG. 13 is a schematic structural diagram of a shell component 5 according to some other embodiments of this application (showing one level of nick 532); and FIG. 14 is a cross-sectional view of the shell component 5 shown in FIG. 13 sectioned along a G-G line. The shell component 5 includes a pressure relief region 56. The groove portion 53 includes one level of nick 532. The nick 532 is disposed along an edge of the pressure relief region 56. The pressure relief region 56 is configured to be able to burst open within a boundary defined by the nick 532. The fragile region 52 forms a bottom of the nick 532.

The pressure relief region 56 is a region capable of bursting open on the shell component 5 upon breakage of the fragile region 52. For example, when the pressure inside the battery cell 10 reaches a threshold, the fragile region 52 is ruptured, and the pressure relief region 56 bursts open outward under the action of the emissions inside the battery cell 10. In this process, the fragile region 52 cracks along the nick 532, and the pressure relief region 56 bursts open, so that the pressure relief region 56 bursts open within a boundary defined by the nick 532. After the pressure relief region 56 bursts open, a vent may be formed at a position corresponding to the pressure relief region 56 on the shell component 5. The emissions inside the battery cell 10 can be expelled through the vent to relieve the pressure inside the battery cell 10.

The nick 532 may be molded diversely on the shell component 5, for example, molded by stamping, milling, or laser etching. The groove portion 53 contains just one level of nick 532, and the one level of nick 532 may be molded by one stamping stroke. The nick 532 may be a variously shaped groove such as an annular groove, an arcuate groove, a U-shaped groove, an H-shaped groove, or the like. The fragile region 52 is formed at the bottom of the nick 532. The shape of the fragile region 52 is identical to the shape of the nick 532. For example, the fragile region 52 is a U-shaped groove, and therefore, the fragile region 52 extends along a U-shaped track.

As an example, a maximum width of the nick 532 is X, satisfying: X ≤ 10 mm. The width of the nick 532 at the widest position is the maximum width of the nick 532.

In these embodiments, the fragile region 52 forms the bottom of the nick 532. When the fragile region 52 is broken, the pressure relief region 56 is able to burst open within a boundary defined by the fragile region 52 to implement pressure relief, thereby increasing the pressure relief area of the shell component 5.

In some embodiments, still referring to FIG. 10, FIG. 12, and FIG. 14, the shell component 5 includes a first surface 54 and a second surface 55 disposed opposite to each other. The nick 532 is recessed from the first surface 54 toward the second surface 55.

The first surface 54 is an inner surface, oriented toward the interior of the battery cell 10, of the shell component 5, and the second surface 55 is an outer surface, oriented back from the interior of the battery cell 10, of the shell component 5; or, the first surface 54 is an outer surface, oriented back from the interior of the battery cell 10, of the shell component 5, and the second surface 55 is an inner surface, oriented toward the interior of the battery cell 10, of the shell component 5. As an example, the first surface 54 is parallel to the second surface 55, and the minimum thickness of the non-fragile region 51 is the distance between the first surface 54 and the second surface 55.

The bottom face of the nick 532 is the bottom face 531 of the groove portion. A part of the shell component 5, which is located between the bottom face of the nick 532 and the second surface 55, is a bottom wall of the nick 532. The bottom wall of the nick 532 is the fragile region 52.

In these embodiments, the groove portion 53 includes just one level of nick 532. The nick 532 constitutes the groove portion 53. The groove portion 53 is a one-level groove, which is simple in structure. During molding, the nick 532 may be molded on the first surface 54. The molding is simple, thereby improving production efficiency, and reducing production cost.

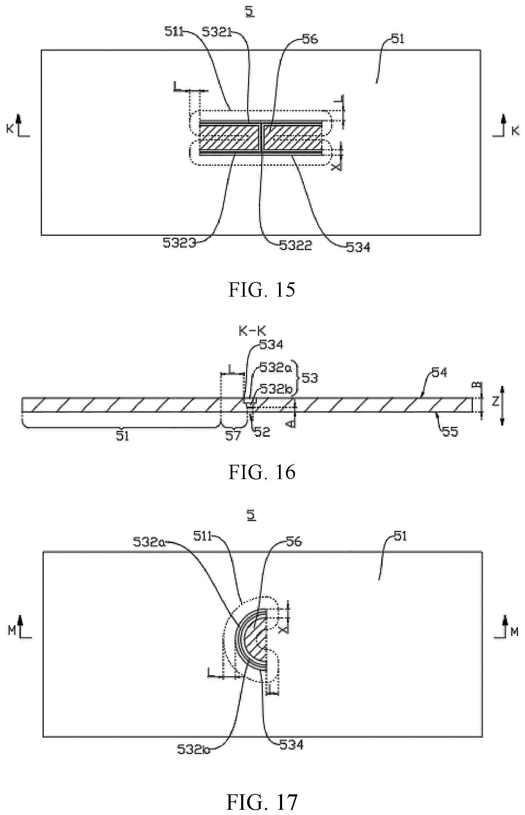

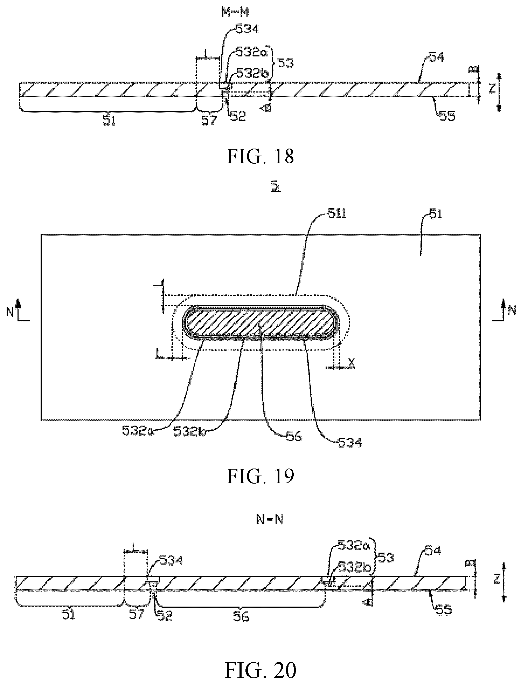

In some embodiments, referring to FIG. 15 to FIG. 20, FIG. 15 is a schematic structural diagram of a shell component 5 according to still some other embodiments of this application (showing two levels of nicks 532); FIG. 16 is a cross-sectional view of the shell component 5 shown in FIG. 15 sectioned along a K-K line; FIG. 17 is a schematic structural diagram of a shell component 5 according to yet some other embodiments of this application (showing two levels of nicks 532); FIG. 18 is a cross-sectional view of the shell component 5 shown in FIG. 17 sectioned along an M-M line; FIG. 19 is a schematic structural diagram of a shell component 5 according to some other embodiments of this application (showing two levels of nicks 532); and FIG. 20 is a cross-sectional view of the shell component 5 shown in FIG. 19 sectioned along an N-N line. The shell component 5 includes a first surface 54 and a second surface 55 disposed opposite to each other. The groove portion 53 includes multiple levels of nicks 532. The multiple levels of nicks 532 are disposed sequentially on the shell component 5 along a direction from the first surface 54 to the second surface 55. The fragile region 52 is formed at a bottom of a level of nick 532 farthest from the first surface 54. The shell component 5 includes a pressure relief region 56. Each level of nick 532 is disposed along an edge of the pressure relief region 56. The pressure relief region 56 is configured to be able to burst open within a boundary defined by the level of nick 532 farthest from the first surface 54.

The groove portion 53 includes multiple levels of nicks 532. Understandably, the groove portion 53 is a multi-level groove. Each level of nick 532 is disposed along the edge of the pressure relief region 56. Understandably, all the levels of nicks 532 are disposed around the pressure relief region 56. In this way, the extension directions of all levels of nicks 532 are substantially the same, so that the shapes of all levels of nicks 532 are substantially the same. The groove portion 53 may include two, three, four, or more levels of nicks 532. Each level of nick 532 may be molded on the shell component 5 by stamping. During molding, each level of nick 532 may be molded by stamping sequentially along a direction from the first surface 54 to the second surface 55. In molding the multiple levels of nicks 532 by stamping, the multiple levels of nicks 532 may be formed by multiple stamping strokes respectively, and one level of nick 532 is molded by each stroke. The nick 532 may be a variously shaped groove such as an annular groove, an arcuate groove, a U-shaped groove, an H-shaped groove, or the like.

The pressure relief region 56 is a region capable of bursting open on the shell component 5 upon breakage of the fragile region 52. The level of nick 532 farthest from the first surface 54 is located at an edge position of the pressure relief region 56. During the burst of the pressure relief region 56, the fragile region 52 is ruptured along the level of nick 532 farthest from the first surface 54, thereby causing the pressure relief region 56 to burst open within a boundary defined by the level of nick 532 farthest from the first surface 54.

The fragile region 52 is formed at the bottom of the level of nick 532 farthest from the first surface 54. The level of nick 532 farthest from the first surface 54 is a level of nick 532 at the (innermost) deepest position. Among two adjacent levels of nicks 532, the level of nick 532 far from the first surface 54 is disposed on the bottom face of the level of nick 532 close to the first surface 54. A part of the shell component 5, which is located between the bottom face of the level of nick 532 farthest from the first surface 54 and the second surface 55, is a bottom wall of the level of nick 532 farthest from the first surface 54. The bottom wall of the nick is the fragile region 52. The bottom face of the level of nick 532 farthest from the first surface 54 is the bottom face 531 of the groove portion. The level of nick 532 farthest from the first surface 54 is the innermost level of nick 532b. The level of nick 532 closest to the first surface 54 is the outermost level of nick 532a.

As an example, a maximum width of the outermost level of nick 532a is X, satisfying: X ≤ 10 mm. A width of the outermost level of nick 532a at the widest position is the maximum width of the outermost level of nick 532a.

During molding, multiple levels of nicks 532 may be molded level by level on the shell component 5, thereby reducing the molding depth of each level of nick 532, and in turn, reducing the molding force exerted on the shell component 5 during molding of each level of nick 532, and reducing the risk of generating cracks on the shell component 5. The shell component 5 is not prone to fail due to the cracks at the position of the nick 532, thereby increasing the service life of the shell component 5.

In some embodiments, referring to FIG. 16, FIG. 18, and FIG. 20, a level of nick 532 farthest from the second surface 55 is recessed from the first surface 54 toward the second surface 55.

As an example, the groove portion 53 includes two levels of nicks 532. The two levels of nicks 532 are a level-one nick and a level-two nick, respectively. The level-one nick is disposed on the first surface 54. That is, the level-one nick is recessed from the first surface 54 toward the second surface 55. The level-two nick is disposed on a bottom face of the level-one nick. That is, the level-two nick is recessed from the bottom face of the level-one nick toward the second surface 55. The level-one nick is the outermost level of nick 532a. The level-two nick is the innermost level of nick 532b.

The groove portion 53 includes multiple levels of nicks 532. During molding, the multiple levels of nicks 532 may be machined stepwise in the direction from the first surface 54 to the second surface 55, thereby achieving high efficiency of molding.

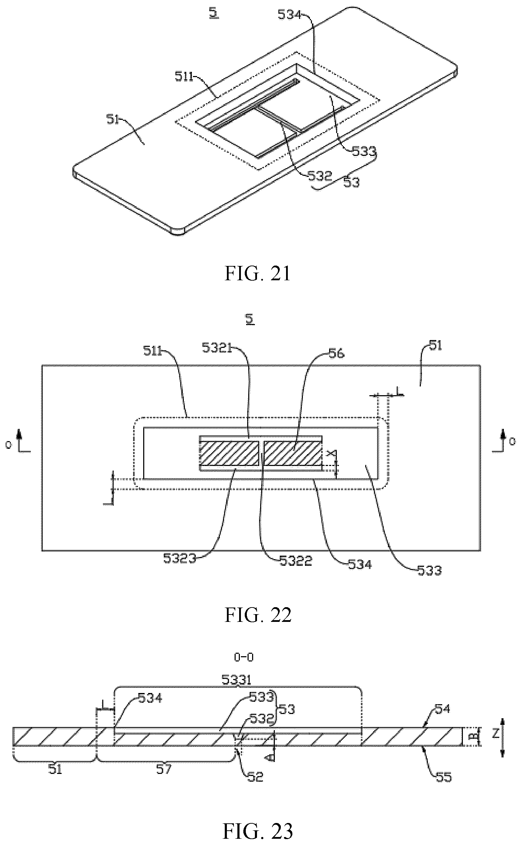

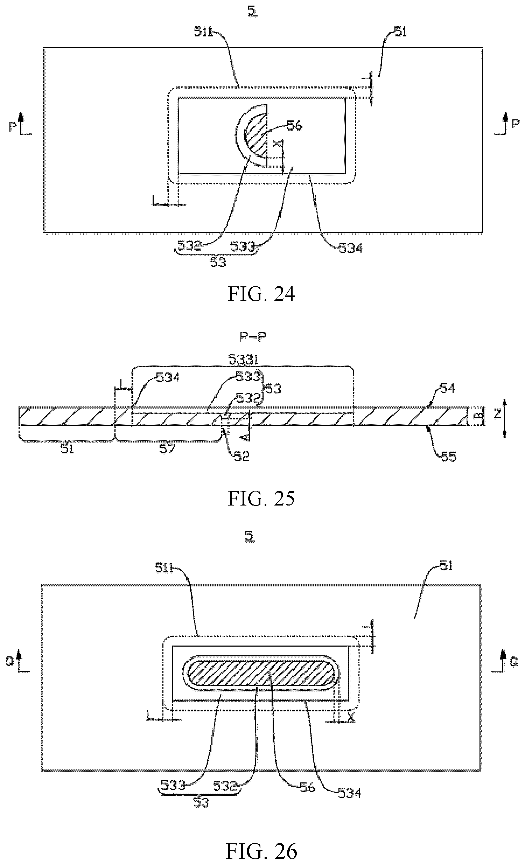

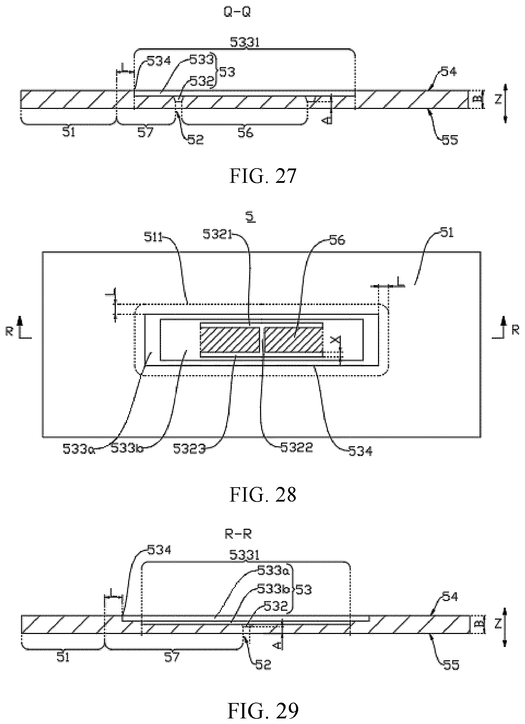

In some embodiments, referring to FIG. 21 to FIG. 27, FIG. 21 is an axonometric drawing of a shell component 5 according to some embodiments of this application; FIG. 22 is a schematic structural diagram of the shell component 5 shown in FIG. 21 (showing one level of nick 532 and one level of countersink 533); FIG. 23 is a cross-sectional view of the shell component 5 shown in FIG. 22 sectioned along an O-O line; FIG. 24 is a schematic structural diagram of a shell component 5 according to yet some other embodiments of this application (showing one level of nick 532 and one level of countersink 533); FIG. 25 is a cross-sectional view of the shell component 5 shown in FIG. 24 sectioned along a P-P line; FIG. 26 is a schematic structural diagram of a shell component 5 according to some other embodiments of this application (showing one level of nick 532 and one level of countersink 533); and FIG. 27 is a cross-sectional view of the shell component 5 shown in FIG. 26 sectioned along a Q-Q line. The shell component 5 includes a first surface 54 and a second surface 55 disposed opposite to each other. The groove portion 53 further includes one level of countersink 533. The countersink 533 is recessed from the first surface 54 toward the second surface 55. The pressure relief region 56 is formed on a bottom wall 5331 of the countersink.

It is hereby noted that, no matter whether the groove portion 53 includes one or more levels of nicks 532, the groove portion 53 may include one level of countersink 533. Understandably, the groove portion 53 includes both the nick 532 and the countersink 533. The groove portion 53 is a multi-level groove. The countersink 533 and the nick 532 are disposed along a direction from the first surface 54 to the second surface 55. During molding, the countersink 533 may be molded first on the shell component 5, and then the nick 532 is molded on the bottom wall 5331 of the countersink. The countersink 533 may be molded diversely on the shell component 5, for example, molded by stamping, milling, or laser etching.

The bottom wall 5331 of the countersink is a part of the shell component 5, the part being located under the bottom face of the countersink 533. After the countersink 533 is molded on the first surface 54, a residual part of the shell component 5, in a region at which the countersink 533 is disposed, is the bottom wall 5331 of the countersink. As shown in FIG. 23, FIG. 25, and FIG. 27, a part of the shell component 5, which is located between the bottom face of the countersink 533 and the second surface 55, is the bottom wall 5331 of the countersink. The pressure relief region 56 may be a part of the bottom wall 5331 of the countersink.

The countersink 533 reduces the depth of the nick 532 when ensuring that the final thickness of the fragile region 52 is constant, thereby reducing the molding force exerted on the shell component 5 during molding of the nick 532, and reducing the risk of generating cracks on the shell component 5. In addition, the countersink 533 can provide a clearance when the pressure relief region 56 bursts open. Therefore, even if the first surface 54 is blocked by an obstacle, the pressure relief region 56 can still burst open to relieve pressure.

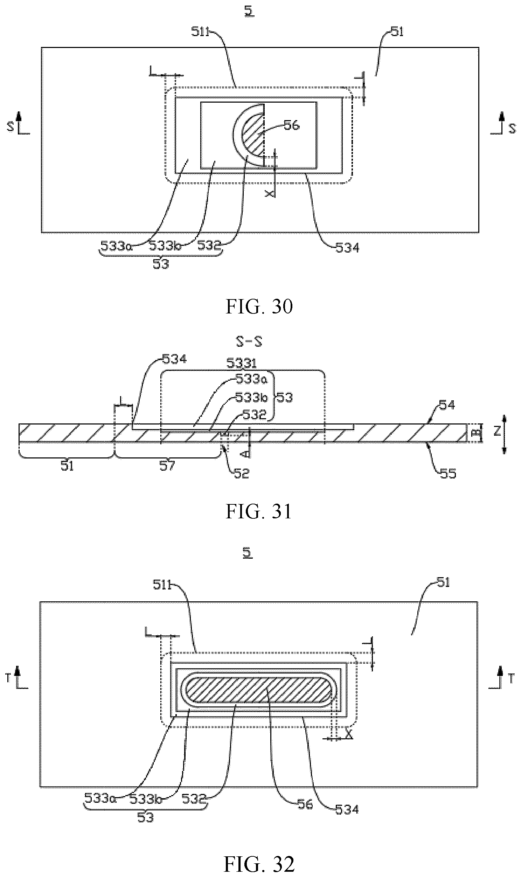

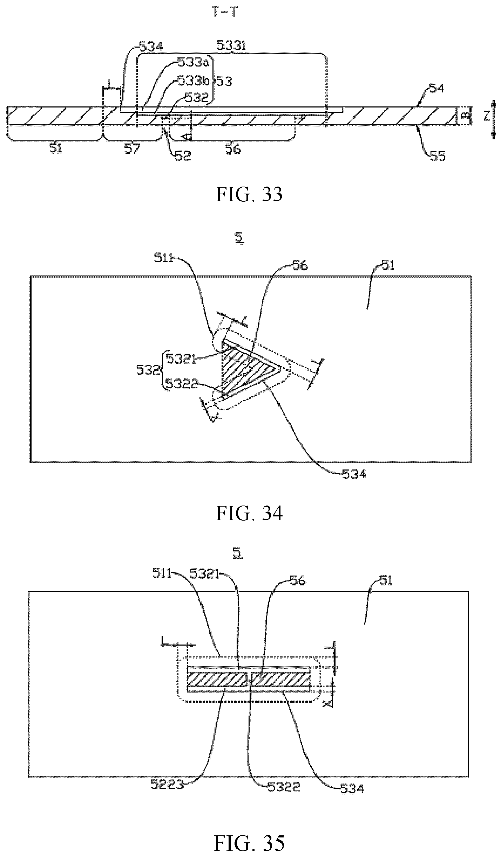

In some embodiments, referring to FIG. 28 to FIG. 33, FIG. 28 is a schematic structural diagram of a shell component 5 according to some embodiments of this application (showing one level of nick 532 and two levels of countersinks 533); FIG. 29 is a cross-sectional view of the shell component 5 shown in FIG. 28 sectioned along an R-R line; FIG. 30 is a schematic structural diagram of a shell component 5 according to yet some other embodiments of this application (showing one level of nick 532 and two levels of countersinks 533); FIG. 31 is a cross-sectional view of the shell component 5 shown in FIG. 30 sectioned along an S-S line; FIG. 32 is a schematic structural diagram of a shell component 5 according to some other embodiments of this application (showing one level of nick 532 and two levels of countersinks 533); and FIG. 33 is a cross-sectional view of the shell component 5 shown in FIG. 32 sectioned along a T-T line. The shell component 5 includes a first surface 54 and a second surface 55 disposed opposite to each other. The groove portion 53 further includes multiple levels of countersinks 533. The multiple levels of countersinks 533 are disposed sequentially on the shell component 5 along a direction from the first surface 54 to the second surface 55. A level of countersink 533 farthest from the second surface 55 is recessed from the first surface 54 toward the second surface 55. The pressure relief region 56 is formed on a bottom wall 5331 of a level of countersink farthest from the first surface 54.

It is hereby noted that, no matter whether the groove portion 53 includes one or more levels of nicks 532, the groove portion 53 may include multiple levels of countersinks 533. Understandably, the groove portion 53 includes both the nick 532 and the countersink 533. The groove portion 53 is a multi-level groove. The countersink 533 and the nick 532 are disposed along a direction from the first surface 54 to the second surface 55. During molding, multiple levels of countersinks 533 may be molded first on the shell component 5, and then the nick 532 is molded on the bottom wall 5331 of a level of countersink farthest from the first surface 54.

The level of countersink 533 farthest from the second surface 55 (closest to the first surface 54) is the outermost level of countersink 533a. The level of countersink 533 farthest from the first surface 54 is the innermost level of countersink 533b. The outermost level of countersink 533a is disposed on the first surface 54. The outermost level of countersink 533a is recessed from the first surface 54 toward the second surface 55.

The bottom wall 5331 of the level of countersink farthest from the first surface 54 is a part of the shell component 5, the part being located under the bottom face of the level of countersink 533 farthest from the first surface 54. After multiple levels of countersinks 533 are molded on the shell component 5, a residual part of the shell component 5, in a region at which the level of countersink 533 farthest from the first surface 54 is disposed, is the bottom wall 5331 of the countersink. As shown in FIG. 29, FIG. 31, and FIG. 33, a part of the shell component 5, which is located between the bottom face of the level of countersink 533 farthest from the first surface 54 and the second surface 55, is the bottom wall 5331 of the level of countersink farthest from the first surface 54. The pressure relief region 56 may be a part of the bottom wall 5331 of the level of countersink farthest from the first surface 54.

The groove portion 53 may include two, three, four, or more levels of countersinks 533. Among two adjacent levels of countersinks 533, the level of countersink 533 far from the first surface 54 is disposed on the bottom face of the level of countersink 533 close to the first surface 54. The contours of the bottom faces of the multiple levels of countersinks 533 decrease level by level along a direction from the first surface 54 to the second surface 55. Each level of countersink 533 may be molded diversely on the shell component 5, for example, molded by stamping, milling, or laser etching. Using an example in which each level of countersink 533 is molded on the shell component 5 by stamping, during molding, different levels of countersinks 533 may be molded by stamping sequentially along the direction from the first surface 54 to the second surface 55, and then the nick 532 is molded by stamping. Using an example in which the groove portion 53 includes two levels of countersinks 533 and one level of nick 532, during molding, two levels of countersinks 533 may be formed by two stamping strokes first, and then one level of nick 532 is formed by one stamping stroke. As an example, in FIG. 28 to FIG. 33, the groove portion 53 includes two levels of countersinks 533.

During molding of multiple levels of countersinks 533, the molding depth of each level of countersink 533 can be reduced, and the molding force exerted on the shell component 5 during molding of each level of countersink 533 can be reduced, thereby reducing the risk of generating cracks on the shell component 5. In addition, the multiple levels of countersinks 533 can provide a clearance when the pressure relief region 56 bursts open. Therefore, even if the first surface 54 is blocked by an obstacle, the pressure relief region 56 can still burst open to relieve pressure.

In some embodiments, an internal space of the countersink 533 is a cylinder, a prism, a circular frustum, or a polygonal frustum.

The internal space of the countersink 533 is a space jointly defined by the lateral face and the bottom face of the countersink 533. The prism may be a triangular prism, quadrangular prism, a pentagonal prism, a hexagonal prism, or the like. The polygonal frustum may be a triangular frustum, a quadrangular frustum, a pentagonal frustum, a hexagonal frustum, or the like. As an example, in FIG. 21 to FIG. 33, the internal space of the groove portion 53 is a quadrangular prism. Specifically, the internal space of the groove portion 53 is a cuboid.

In these embodiments, the countersink 533 is simple in structure and easy to mold, and can provide more clearance when the pressure relief region 56 bursts open.

In some embodiments, referring to FIG. 34, FIG. 34 is a schematic structural diagram of a shell component 5 according to some embodiments of this application (showing one level of nick 532, the nick 532 being V-shaped). The nick 532 includes a first nick section 5321 and a second nick section 5322. The first nick section 5321 intersects the second nick section 5322. The first nick section 5321 and the second nick section 5322 are disposed along an edge of the pressure relief region 56.

The first nick section 5321 and the second nick section 5322 may be rectilinear grooves or non-rectilinear grooves such as arcuate grooves. In an embodiment in which the first nick section 5321 and the second nick section 5322 are both rectilinear grooves, understandably, both the first nick section 5321 and the second nick section 5322 extend along a straight line. The first nick section 5321 may be disposed at an acute angle, a right angle, or an obtuse angle to the second nick section 5322. The first nick section 5321 may intersect the second nick section 5322. For example, a position of intersection between the first nick section 5321 and the second nick section 5322 is located at a midpoint of the first nick section 5321 and a midpoint of the second nick section 5322. Alternatively, as shown in FIG. 34, the position of intersection between the first nick section 5321 and the second nick section 5322 is located at an end of the first nick section 5321 and an end of the second nick section 5322, the first nick section 5321 and the second nick section 5322 form a V-shaped structure, and the nick 532 is V-shaped.

In these embodiments, the stress is more concentrated at the position of intersection between the first nick section 5321 and the second nick section 5322, thereby enabling the fragile region 52 to be broken at the position of intersection between the first nick section 5321 and the second nick section 5322 first. In a case that a burst pressure of the battery cell 10 is constant, the fragile region 52 can be made thicker, and the molding depth of the nick 532 can be reduced.

In some embodiments, referring to FIG. 9, FIG. 15, FIG. 22, and FIG. 28, the nick 532 may further include a third nick section 5323. The first nick section 5321 and the third nick section 5323 are disposed opposite to each other. The second nick section 5322 intersects the third nick section 5323. The first nick section 5321, the second nick section 5322, and the third nick section 5323 are disposed along the edge of the pressure relief region 56.

The first nick section 5321, the second nick section 5322, and the third nick section 5323 may be all rectilinear grooves or non-rectilinear grooves such as arcuate grooves. In an embodiment in which the first nick section 5321, the second nick section 5322, and the third nick section 5323 are all rectilinear grooves, understandably, the first nick section 5321, the second nick section 5322, and the third nick section 5323 all extend along a straight line. The first nick section 5321 may be disposed parallel to or at an angle to the third nick section 5323. The first nick section 5321 and the third nick section 5323 may be both perpendicular to the second nick section 5322, or not perpendicular to the second nick section 5322.

The junction between the second nick section 5322 and the first nick section 5321 may be located at one end of the first nick section 5321, or may be located at a position deviating from one end of the first nick section 5321. For example, the junction between the second nick section 5322 and the first nick section 5321 is located at a midpoint of the first nick section 5321 in the extension direction. The junction between the second nick section 5322 and the third nick section 5323 may be located at one end of the third nick section 5323, or may be located at a position deviating from one end of the third nick section 5323. For example, the junction between the second nick section 5322 and the third nick section 5323 is located at a midpoint of the third nick section 5323 in the extension direction.

It is hereby noted that in an embodiment in which the groove portion 53 includes multiple levels of nicks 532, understandably, among two adjacent levels of nicks 532, the first nick section 5321 of a level of nick 532 far from the first surface 54 is disposed on the bottom face of the first nick section 5321 of a level of nick 532 close to the first surface 54. The second nick section 5322 of a level of nick 532 far from the first surface 54 is disposed on the bottom face of the second nick section 5322 of a level of nick 532 close to the first surface 54. The third nick section 5323 of a level of nick 532 far from the first surface 54 is disposed on the bottom face of the third nick section 5323 of a level of nick 532 close to the first surface 54.

In these embodiments, the pressure relief region 56 can burst open within a boundary defined by the first nick section 5321, the second nick section 5322, and the third nick section 5323. When the battery cell 10 is relieved of pressure, the pressure relief region 56 can burst open more easily, and a large area of the shell component 5 can be used for relieving pressure.

In some embodiments, still referring to FIG. 9, FIG. 15, FIG. 22, and FIG. 28, the first nick section 5321, the second nick section 5322, and the third nick section 5323 define two pressure relief regions 56. The two pressure relief regions 56 are located on two sides of the second nick section 5322 respectively.

As an example, the first nick section 5321, the second nick section 5322, and the third nick section 5323 form an H-shaped nick 532. The junction between the second nick section 5322 and the first nick section 5321 is located at the midpoint of the first nick section 5321. The junction between the third nick section 5323 and the second nick section 5322 is located at the midpoint of the third nick section 5323. The two pressure relief regions 56 are symmetrically disposed on two sides of the second nick section 5322. Understandably, the two pressure relief regions 56 are of equal areas. Alternatively, in other embodiments, the two pressure relief regions 56 may be disposed asymmetrically on the two sides of the second nick section 5322, so that the areas of the two pressure relief regions 56 are unequal. For example, both the first nick section 5321 and the third nick section 5323 are perpendicular to the second nick section 5322, and the junction between the second nick section 5322 and the first nick section 5321 deviates from the midpoint of the first nick section 5321; and/or, the junction between the third nick section 5323 and the second nick section 5322 is located at the midpoint of the third nick section 5323.

The two pressure relief regions 56 are located on two sides of the second nick section 5322 respectively, so that the two pressure relief regions 56 are delimited by the second nick section 5322. After the shell component 5 is ruptured at the position of the second nick section 5322, the two pressure relief regions 56 can burst open in two-piece form along the first nick section 5321 and the third nick section 5323 to relieve pressure, thereby effectively improving the pressure relief efficiency of the shell component 5.

In some other embodiments, the first nick section 5321, the second nick section 5322, and the third nick section 5323 are connected sequentially. The first nick section 5321, the second nick section 5322, and the third nick section 5323 define one pressure relief region 56.

The first nick section 5321, the second nick section 5322, and the third nick section 5323 may be connected sequentially to form a U-shaped nick 532.

In some embodiments, the nick 532 is a groove extending along a non-closed track.

The non-closed track is a track with two ends not connected to each other in the extension direction. The non-closed track may be an arcuate track, a U-shaped track, or the like.

In these embodiments, the nick 532 is a groove extending along a non-closed track. The pressure relief region 56 can burst open in a flip-over manner. After bursting open, the pressure relief region 56 is eventually connected to other regions of the shell component 5, thereby reducing the risk of splashing when the pressure relief region 56 bursts open.

In some embodiments, referring to FIG. 11, FIG. 17, FIG. 24, and FIG. 30, the nick 532 is an arcuate groove.

The arcuate groove is a groove extending along an arcuate track. The arcuate track is a non-closed track. A central angle of the arcuate groove may be less than, equal to, or greater than 180°.

The arcuate groove is simple in structure and easy to mold. During the pressure relief, the pressure relief region 56 can rupture quickly along the arcuate groove to burst the pressure relief region 56 open quickly.

In some embodiments, referring to FIG. 13, FIG. 19, FIG. 26, and FIG. 32, the nick 532 is a groove extending along a closed track.

The closed track is a track with two ends (a start end and a terminating end) connected to each other. The closed track may be a circular track, a rectangular track, or the like.

During the pressure relief, the shell component 5 can rupture along the nick 532, and enable the pressure relief region 56 to burst open in a fall-off manner, thereby increasing the pressure relief area of the shell component 5, and increasing the pressure relief rate of the shell component 5.

In some embodiments, the nick 532 is an annular groove.

The annular groove may be a rectangular ring groove or a circular ring groove.

The annular groove is simple in structure and easy to mold. During the pressure relief, the shell component 5 can rupture quickly along the annular groove, and make the pressure relief region 56 burst open quickly.

In some embodiments, an area of the pressure relief region 56 is D, satisfying: 90 mm² ≤ D ≤ 1500 mm².

In FIG. 9, FIG. 11, FIG. 13, FIG. 15, FIG. 17, FIG. 19, FIG. 22, FIG. 24, FIG. 26, FIG. 28, FIG. 30, FIG. 32, and FIG. 34, the area of the shaded part is the area of the pressure relief region 56.

It is hereby noted that, in an embodiment in which the groove portion 53 includes multiple levels of nicks 532, the area of the pressure relief region 56 is the area of a region defined by the (innermost) level of nick 532 at the deepest position.

D may be any one of 90 mm², 95 mm², 100 mm², 150 mm², 200 mm², 250 mm², 300 mm², 350 mm², 400 mm², 450 mm², 500 mm², 550 mm², 600 mm², 650 mm², 700 mm², 750 mm², 800 mm², 900 mm², 950 mm², 1000 mm², 1050 mm², 1100 mm², 1150 mm², 1200 mm², 1250 mm², 1300 mm², 1350 mm², 1400 mm², 1450 mm², 1500 mm², or a value falling with a range formed by any two thereof.

When D is less than 90 mm², the pressure relief area of the shell component 5 is relatively small, and the timeliness of pressure relief is relatively low in a case of thermal runaway of the battery cell 10. When D is greater than 1500 mm², the impact resistance of the pressure relief region 56 is relatively low, and the deformation of the stressed pressure relief region 56 increases. The fragile region 52 is prone to be broken when the battery cell 10 is in normal use, thereby impairing the service life of the battery cell 10. Therefore, controlling D to fall within 90 mm² ≤ D ≤ 1500 mm² can increase the service life of the battery cell 10 and improve safety of the battery cell 10.

Further, 150 mm² ≤ D ≤ 1200 mm². This setting improves the overall performance of the shell component 5 and enables the shell component 5 to provide a relatively large pressure relief area and a relatively high impact resistance.

Further, 200 mm² ≤ D ≤ 1000 mm².

Further, 250 mm² ≤ D ≤ 800 mm².

In some embodiments, referring to FIG. 4 to FIG. 34, the shell component 5 includes a first surface 54 and a second surface 55 disposed opposite to each other. The groove portion 53 is recessed from the first surface 54 toward the second surface 55. The groove portion 53 forms an outer edge 534 on the first surface 54. A region at a distance beyond a preset distance from the outer edge 534 on the shell component 5 is the non-fragile region 51. The preset distance is L.

L may be 1 mm, 2 mm, 3 mm, 4 mm, 5 mm, 6 mm, 7 mm, 8 mm, 9 mm, 10 mm, or the like.

In the embodiments shown in FIG. 9 to FIG. 14, the groove portion 53 includes just one level of nick 532. The nick 532 is disposed on the first surface 54. The lateral face of the nick 532 intersects the first surface 54 to form an outer edge 534. The lateral face of the nick 532 is disposed around the bottom face of the nick 532. It is hereby noted that, in the embodiment shown in FIG. 13, because the nick 532 is a groove extending along a closed track, the lateral face of the nick 532 intersects the first surface 54 to form an inner annular line and an outer annular line located outside the inner annular line. The outer annular line is the outer edge 534.

In the embodiments shown in FIG. 15 to FIG. 20, the groove portion 53 just includes multiple levels of nicks 532. The outermost level of nick 532a is disposed on the first surface 54. The lateral face of the outermost level of nick 532a intersects the first surface 54 to form an outer edge 534. It is hereby noted that, in the embodiment shown in FIG. 19, because the nick 532 is a groove extending along a closed track, the outermost level of nick 532a intersects the first surface 54 to form an inner annular line and an outer annular line located outside the inner annular line. The outer annular line is the outer edge 534.

In the embodiments shown in FIG. 21 to FIG. 27, the groove portion 53 further includes one level of countersink 533. The countersink 533 is disposed on the first surface 54. The lateral face of the countersink 533 intersects the first surface 54 to form an outer edge 534. The lateral face of the countersink 533 is disposed around the bottom face of the countersink 533. In the embodiments shown in FIG. 28 to FIG. 33, the groove portion 53 further includes multiple levels of countersinks 533. The outermost level of countersink 533a is disposed on the first surface 54. The lateral face of the outermost level of countersink 533a intersects the first surface 54 to form an outer edge 534.

Understandably, the distance between the outer edge 534 and the inner edge 511 of the non-fragile region 51 is the preset distance L. The shape of the inner edge 511 of the non-fragile region 51 may be substantially the same as the shape of the outer edge 534. The direction along the preset distance L may be perpendicular to the thickness direction of the non-fragile region 51. In other words, the preset distance L may be measured along a direction perpendicular to the thickness direction of the non-fragile region 51. In measuring the average grain size of the non-fragile region 51, the measurement may be made in a region at a distance beyond the preset distance from the outer edge 534.

In this embodiment, the region at a distance beyond the preset distance from the outer edge 534 on the shell component 5 is the non-fragile region 51. The non-fragile region 51 is at a specified distance from the groove portion 53. The non-fragile region 51 is not susceptible to impact during molding of the groove portion 53, thereby making the grains in the non-fragile region 51 more uniform.

In some embodiments, L is equal to 5 mm.

It is hereby noted that, as shown in FIG. 9 and FIG. 15, in an embodiment in which the first nick section 5321 and the third nick section 5323 of the nick 532 are disposed opposite to each other, using an example in which the first nick section 5321 is parallel to the third nick section 5323, when a spacing between the first nick section 5321 and the third nick section 5323 is greater than 2×L, the inner edge 511 of the non-fragile region 51 is partially located in the pressure relief region 56, thereby causing the pressure relief region 56 to be partially located in the non-fragile region 51. In some other embodiments, referring to FIG. 35, FIG. 35 is a schematic structural diagram of a shell component 5 according to some other embodiments of this application. When the spacing between the first nick section 5321 and the third nick section 5323 is less than or equal to 2×L, the inner edge 511 of the non-fragile region 51 is not located in the pressure relief regions 56. The inner edge 511 of the non-fragile regions 51 is substantially rectangular. Along the width direction of the first nick section 5321, the spacing between the first nick section 5321 and the inner edge 511 of the non-fragile region 51 is L. Along the length direction of the first nick section 5321, the spacing between the first nick section 5321 and the inner edge 511 of the non-fragile region 51 is L. Along the width direction of the third nick section 5323, the spacing between the third nick section 5323 and the inner edge 511 of the non-fragile region 51 is L. Along the length direction of the third nick section 5323, the spacing between the third nick section 5323 and the inner edge 511 of the non-fragile region 51 is L.

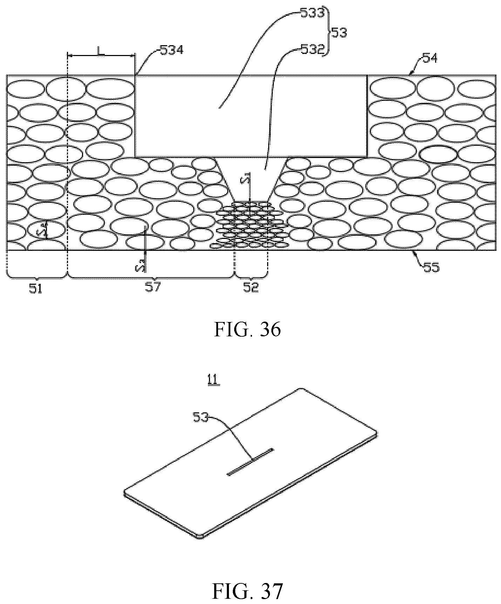

In some embodiments, referring to FIG. 36, FIG. 36 is a (schematic) crystal grain map of a shell component 5 according to some other embodiments of this application. The shell component 5 further includes a transition region 57. The transition region 57 connects the fragile region 52 and the non-fragile region 51. An average grain size of the transition region 57 is S₃, satisfying: S₃ ≤ S₂.

As an example, S₃ > S₁.

The transition region 57 is a part of the shell component 5, the part connecting the fragile region 52 and the non-fragile region 51. The transition region 57 is disposed around the fragile region 52. The non-fragile region 51 is disposed around the transition region 57. The fragile region 52, the transition region 57, and the non-fragile region 51 are formed in one piece.

The average grain size of the transition region 57 may progressively decrease from the non-fragile region 51 to the fragile region 52. As an example, as shown in FIG. 36, using an example in which the groove portion 53 includes one level of countersink 533 and one level of nick 532, the average grain size of the transition region 57 in the outer region of the countersink 533 may be greater than the average grain size of the transition region 57 in the bottom region of the countersink 533. The average grain size of the transition region 57 in the outer region of the countersink 533 may be less than or equal to the average grain size S₂ of the non-fragile region 51. The average grain size of the transition region 57 in the bottom region of the countersink 533 may be greater than the average grain size S₁ of the fragile region 52.

In these embodiments, the transition region 57 serves to connect the fragile region 52 and the non-fragile region 51, and enables the fragile region 52 and the non-fragile region 51 to be formed in one piece.

In some embodiments, referring to FIG. 37, FIG. 37 is a schematic structural diagram of an end cap 11 according to some embodiments of this application. The shell component 5 is an end cap 11. The end cap 11 is configured to seal an opening of a housing 12. The housing 12 is configured to accommodate an electrode assembly 2.

Understandably, a groove portion 53 is disposed on the end cap 11 to form a fragile region 52 and a non-fragile region 51 correspondingly. The first surface 54 and the second surface 55 of the shell component 5 are two surfaces of the end cap 11, the two surfaces being opposite to each other in the thickness direction. In other words, of the first surface 54 and the second surface 55, one is an inner surface of the end cap 11 in the thickness direction, and the other is an outer surface of the end cap 11 in the thickness direction.

The end cap 11 may be a circular or rectangular plate-like structure.

As an example, in the embodiment shown in FIG. 37, the end cap 11 is a rectangular plate-like structure.

In these embodiments, the end cap 11 serves a function of pressure relief to ensure the safety of the battery cell 10.

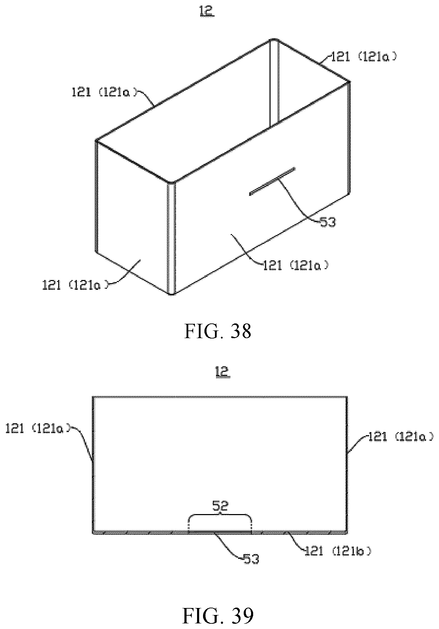

In some embodiments, referring to FIG. 38 and FIG. 39, FIG. 38 is a schematic structural diagram of a housing 12 according to some embodiments of this application; and FIG. 39 is a schematic structural diagram of a housing 12 according to some other embodiments of this application. The shell component 5 is a housing 12. An opening is created on the housing 12. The housing 12 is configured to accommodate an electrode assembly 2.

In these embodiments, the housing 12 of the shell 1 is a shell component 5. The end cap 11 of the shell 1 is configured to seal the opening of the housing 12. The housing 12 may be a hollow structure opened at one end, or a hollow structure opened at two opposite ends. The housing 12 may be cuboidal, cylindrical, or the like.

In these embodiments, the shell component 5 is the housing 12, so the housing 12 serves a function of pressure relief to ensure the safety of the battery cell 10.

In some embodiments, the housing 12 includes a plurality of wall portions 121 formed in one piece. The plurality of wall portions 121 jointly define an internal space of the housing 12. The groove portion 53 is disposed on at least one of the wall portions 121.

In the housing 12, the groove portion 53 may be disposed on one wall portion 121, so as to form a fragile region 52 and a non-fragile region 51 in one piece on the wall portion 121 correspondingly. Alternatively, the groove portion 53 is disposed on a plurality of wall portions 121, so as to form a fragile region 52 and a non-fragile region 51 in one piece on each wall portion 121 containing the groove portion 53. For a wall portion 121 containing the groove portion 53, the first surface 54 and the second surface 55 of the shell component 5 are two surfaces of the wall portion 121, the two surfaces being opposite to each other in the thickness direction. In other words, of the first surface 54 and the second surface 55, one is an inner surface of the wall portion 121 in the thickness direction, and the other is an outer surface of the wall portion 121 in the thickness direction.

In these embodiments, the plurality of wall portions 121 are formed in one piece so that the wall portion 121 containing the groove portion 53 is more reliable.

In some embodiments, still referring to FIG. 38 and FIG. 39, the plurality of wall portions 121 include a bottom wall 121b and a plurality of sidewalls 121a disposed around the bottom wall 121b. The opening is formed at an end opposite to the bottom wall 121b on the housing 12. The groove portion 53 is disposed on the bottom wall 121b; and/or the groove portion 53 is disposed on at least one of the sidewalls 121a.

In these embodiments, the housing 12 is a hollow structure opened at one end. The housing 12 may include three, four, five, six, or more sidewalls 121a. The groove portion 53 may be disposed on one, two, three, four, five, six, or more sidewalls 121a.

As an example, in FIG. 38, the groove portion 53 is disposed on just one sidewall 121a, so as to form a fragile region 52 and a non-fragile region 51 on the sidewall 121a correspondingly. In FIG. 39, the groove portion 53 is disposed on just the bottom wall 121b, so as to form a fragile region 52 and a non-fragile region 51 on the bottom wall 121b correspondingly.

In some embodiments, still referring to FIG. 38 and FIG. 39, the housing 12 is a cuboid.

Understandably, the housing 12 includes four sidewalls 121a.

The cuboidal housing is suitable for a prismatic battery cell, and can meet the high-capacity requirement of the battery cell 10.

In some embodiments, the shell component 5 is made of a material including an aluminum alloy.

The shell component 5 made of an aluminum alloy is lightweight, highly ductile, highly plastic-deformable, and easy to mold.

In an embodiment in which the A/B ratio falls within 0.2 ≤ A/B ≤ 0.5, because the aluminum alloy is of high ductility, it is easier to control the A/B ratio to be 0.5 or less than 0.5 in molding the groove portion 53 on the shell component 5 by stamping, and the molding yield rate is higher.

In some embodiments, the aluminum alloy includes the following constituents at the following mass percent: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%. This type of aluminum alloy is of lower hardness and more moldable, thereby reducing the difficulty of molding the groove portion 53, improving the molding precision of the groove portion 53, and improving the consistency of pressure relief of the shell component 5.

In some embodiments, the aluminum alloy includes the following constituents at the following mass percent: aluminum ≥ 96.7%, 0.05% ≤ copper ≤ 0.2%, iron ≤ 0.7%, manganese ≤ 1.5%, silicon ≤ 0.6%, zinc ≤ 0.1%, a mass percent of each of other individual elements ≤ 0.05%, and a total mass percent of other elements ≤ 0.15%. The shell component 5 made of this aluminum alloy is of higher hardness and high strength, and high resistance to damage.

An embodiment of this application provides a battery cell 10, including the shell component 5 provided in any one of the embodiments described above.

In some embodiments, the battery cell 10 further includes a housing 12. An opening is created on the housing 12. The housing 12 is configured to accommodate an electrode assembly 2. The shell component 5 is an end cap 11, and the end cap 11 is configured to seal the opening.

In some embodiments, the shell component 5 is a housing 12. An opening is created on the housing 12. The housing 12 is configured to accommodate an electrode assembly 2. The battery cell 10 further includes an end cap 11. The end cap 11 is configured to seal the opening.

An embodiment of this application provides a battery 100, including the battery cell 10 provided in any one of the embodiments described above.

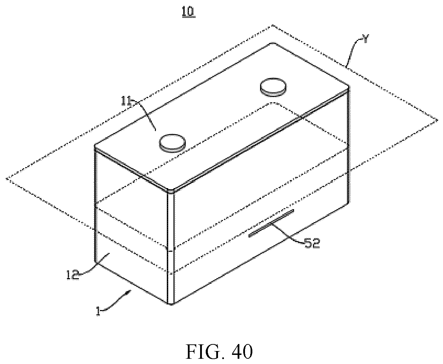

In some embodiments, referring to FIG. 40, FIG. 40 is a schematic structural diagram of a battery cell 10 according to some embodiments of this application. A fragile region 52 is located at a lower part of the battery cell 10.

In the battery cell 10, along the height direction of the shell 1 of the battery cell 10, a part of the battery cell 10, located below a midplane Y of the shell 1, is the lower part of the battery cell 10. The midplane Y is perpendicular to the height direction of the shell 1. The midplane Y is at equal distances from two end faces of the shell 1 in the height direction. For example, the shell 1 includes a housing 12 and an end cap 11. The end cap 11 is configured to seal an opening of the housing 12. The housing 12 and the end cap 11 are arranged along the height direction of the shell 1. Along the height direction of the shell 1, the midplane Y is located at a middle position between an outer surface of the end cap 11 and an outer surface of the housing 12, where the outer surface of the end cap is oriented back from the housing 12, and the outer surface of the housing is oriented back from the end cap 11.

The fragile region 52 is located at a lower part of the battery cell 10, and therefore, the groove portion 53 is located at the lower part of the battery cell 10, and both the fragile region 52 and the groove portion 53 are located below the midplane Y. The fragile region 52 may be located on the housing 12, or the fragile region 52 may be located on the end cap 11 instead. The fragile region 52 may be located on a sidewall 121a of the housing 12, or may be located on a bottom wall 121b of the housing 12. As shown in FIG. 40, using an example in which the fragile region 52 is located on the sidewall 121a of the housing 12, the bottom wall 121b of the housing 12 may be located below the end cap 11, and the fragile region 52 may be located below the midplane Y, so that the distance from the fragile region 52 to the bottom wall 121b of the housing 12 is less than the distance from the fragile region 52 to the end cap 11.

Because the fragile region 52 is located at the lower part of the battery cell 10, during the use of the battery 100, the fragile region 52 is subjected to a relatively large force from the gravity of the electrode assembly 2, electrolyte solution, and the like inside the battery cell 10. The fragile region 52 and the non-fragile region 51 are formed in one piece, thereby being of high structural strength and higher reliability, and in turn, increasing the service life of the battery cell 10.

In some embodiments, the battery cell 10 includes a housing 12. The housing 12 is configured to accommodate an electrode assembly 2. The housing 12 includes a bottom wall 121b and a plurality of sidewalls 121a disposed around the bottom wall 121b. The bottom wall 121b and the sidewalls 121a are formed in one piece. An opening is formed at an end opposite to the bottom wall 121b on the housing 12. The fragile region 52 is located on the bottom wall 121b.

Understandably, the bottom wall 121b is located below the midplane Y.

In these embodiments, the fragile region 52 is located on the bottom wall 121b, so that the fragile region 52 is oriented downward. In a case of thermal runaway of the battery cell 10, the emissions in the battery cell 10 are ejected downward upon breakage of the fragile region 52, thereby reducing safety hazards. For example, in a vehicle 1000, the battery 100 is generally mounted below a passenger compartment. With the fragile region 52 being oriented downward, the emissions expelled from the battery cell 10 in the case of thermal runaway are ejected back from the passenger compartment, thereby reducing the impact of the emissions on the passenger compartment, and reducing the safety hazards.

In some embodiments, the battery cell 10 includes an end cap 11. The end cap 11 is configured to seal an opening of a housing 12. The housing 12 is configured to accommodate an electrode assembly 2. The fragile region 52 is located on the end cap 11.

Understandably, the end cap 11 is located below the midplane Y.

In these embodiments, the fragile region 52 is located on the end cap 11, so that the fragile region 52 is oriented downward. In a case of thermal runaway of the battery cell 10, the emissions in the battery cell 10 are ejected downward upon breakage of the fragile region 52, thereby reducing safety hazards.

An embodiment of this application provides an electrical device, including the battery 100 according to any embodiment described above.

In some embodiments, an embodiment of this application provides an end cap 11, applicable to a battery cell 10. The end cap 11 includes a non-fragile region 51 and a fragile region 52 formed in one piece. A groove portion 53 is disposed on the end cap 11. The non-fragile region 51 is formed around the groove portion 53. The fragile region 52 is formed at a bottom of the groove portion 53. The fragile region 52 is configured to be broken when the battery cell 10 is relieved of an internal pressure. The end cap 11 includes a first surface 54 oriented back from the interior of the battery cell 10. The groove portion 53 forms an outer edge 534 on the first surface 54. A region at a distance beyond a preset distance from the outer edge 534 on the end cap 11 is the non-fragile region 51, where the preset distance is L, and L is equal to 5 mm. A minimum thickness of the fragile region 52 is A, a minimum thickness of the non-fragile region 51 is B, an average grain size of the fragile region 52 is S₁, an average grain size of the non-fragile region 51 is S₂, a hardness of the fragile region 52 is H₁, and a hardness of the non-fragile region 51 is H₂, satisfying: 0.2 ≤ A/B ≤ 0.5, 0.1 ≤ S₁/S₂ ≤ 0.5, 5 ≤ A/S₁ ≤ 20, 190 HBW/mm ≤ H₁/A ≤ 4000 HBW/mm, and 1 < H₁/H₂ ≤ 2.5.

In some embodiments, an embodiment of this application provides a housing 12, applicable to a battery cell 10. The housing 12 includes a non-fragile region 51 and a fragile region 52 formed in one piece. A groove portion 53 is disposed on the housing 12. The non-fragile region 51 is formed around the groove portion 53. The fragile region 52 is formed at a bottom of the groove portion 53. The fragile region 52 is configured to be broken when the battery cell 10 is relieved of an internal pressure. The housing 12 includes a first surface 54 oriented back from the interior of the battery cell 10. The groove portion 53 forms an outer edge 534 on the first surface 54. A region at a distance beyond a preset distance from the outer edge 534 on the housing 12 is the non-fragile region 51, where the preset distance is L, and L is equal to 5 mm. An average grain size of the fragile region 52 is S₁, an average grain size of the non-fragile region 51 is S₂, a minimum thickness of the fragile region 52 is A, a minimum thickness of the non-fragile region 51 is B, a hardness of the fragile region 52 is H₁, and a hardness of the non-fragile region 51 is H₂, satisfying: 0.2 ≤ A/B ≤ 0.5, 0.1 ≤ S₁/S₂ ≤ 0.5, 5 ≤ A/S₁ ≤ 20, 190 HBW/mm ≤ H₁/A ≤ 4000 HBW/mm, and 1 ≤ H₁/H₂ ≤ 2.5.

The following describes the features and performance of this application in more detail with reference to some embodiments.

In each embodiment and comparative embodiment, the battery cell 10 is a prismatic battery. The end cap 11 in the battery cell 10 serves as a shell component 5. The capacity of the battery cell 10 is 150 Ah. The chemical system is NCM.

### I. Test methods

### (1) Testing the hardness of the fragile region 52 and the non-fragile region 51

Cutting a shell component 5 into 3 sections, and using a middle section as a test-piece, where cross-sections of the test-piece at both ends each include a fragile region 52 and a non-fragile region 51, and the cutting direction is perpendicular to the length direction of the fragile region 52. Polishing the cross-sections of the test-piece to remove the burrs thoroughly. Measuring the hardness of the test-piece by use of a Brinell hardness tester. Placing the test-piece horizontally (with the sectioning direction of the test-piece being parallel to an indentation direction of the hardness tester). If the width of the fragile region 52 is less than 1 mm or the size of an indenter of the Brinell hardness tester is much larger than the width of the fragile region 52, the non-standard indenter needs to be processed for hardness measurement in accordance with the principles of Brinell hardness measurement and unit conversion.

### (2) Testing the average grain size of the fragile region 52 and the non-fragile region 51

Measuring the average grain size of the fragile region 52 and the non-fragile region 51 by electron backscatter diffractometry (EBSD). Cutting a shell component 5 into sections, and taking a middle section, where cross-sections of the middle section at both ends each include a fragile region 52 and a non-fragile region 51, the cutting direction is perpendicular to the length direction of the fragile regions 52, and the cutting equipment does not change the grain structure. Using the middle section as a test-piece, and then electrolytically polishing the sample, and then fixing the test-piece onto a sample holder tilted at 70°. Selecting an appropriate magnification, and scanning the test-piece by use of an scanning electron microscope (SEM) fitted with an electron backscatter diffractometry (EBSD) accessory. Finally, calculating the average grain size (that is, an equivalent circle diameter of intact grains in an inspection surface) based on the scanning results.

### (3) Testing the minimum thickness of the fragile region 52 and the non-fragile region 51

Cutting a shell component 5 into 3 sections, and using a middle section as a test-piece, where cross-sections of the test-piece at both ends each include a fragile region 52 and a non-fragile region 51, and the cutting direction is perpendicular to the length direction of the fragile regions 52. Polishing the cross-sections of the middle section to remove the burrs thoroughly, and then placing the test-piece on a three-dimensional coordinate measuring machine to measure the thicknesses of the fragile region 52 and non-fragile region 51 on the cross-sections.

### (4) Crack rate of the fragile region 52 under normal operating conditions of the battery cell 10

Placing the battery cell 10 in a 25±2 °C environment, and charging and discharging the battery cell within a SOC range of 5% to 97% SOC. Monitoring the gas pressure inside the battery cell 10 at the same time. Testing 500 groups of samples simultaneously. The test cut-off condition is: the lifespan of the battery cell 10 decreases to 80% SOH or any one group of battery cells 10 cracks in the fragile region 52 during the cycling. The crack in the fragile region 52 is determined based on the following criteria: the internal gas pressure value of the battery cell 10 is decreased, and the decrement is greater than 10% of the maximum gas pressure. The crack rate of the fragile region 52 is calculated as: crack rate = number of cracked samples/total number of samples × 100%.

### (5) Explosion rate of the battery cells 10 in a case of thermal runaway

Disposing a small heating film into a battery cell 10, and energizing the heating film to heat the battery cell 10 until the battery cell 10 is thermally runaway. Observing whether the battery cell 10 explodes. Repeating the test for 500 groups of samples. Calculating the explosion rate of the battery cells 10 as: explosion rate = number of exploded samples/total number of samples × 100%.

### II. Test results

In each of the embodiments and comparative embodiments, the test results of the hardness H₁ of the fragile region 52, the hardness H₂ of the non-fragile region 51, the average grain size S₁ of the fragile region 52, the average grain size S₂ of the non-fragile region 51, the minimum thickness A of the fragile region 52, and the minimum thickness B of the non-fragile region 51 are shown in Table 1. In Table 1, the unit of H₁ and H₂ is in HBW, the unit of S₁ and S₂ is mm, the unit of A and B is mm. The crack rate Q₁ of the fragile region 52 of the battery cells 10 in normal use and the explosion rate Q₂ of the battery cells 10 in a case of thermal runaway are shown in Table 2.

**Table 1**

| | H₁ | H₂ | H₁/H₂ | S₁ | S₂ | S₁/S₂ | A | A/S₁ | H₁/A | B | A/B |
|---|---|---|---|---|---|---|---|---|---|---|---|
| Embodiment 1 | 240 | 40 | 6 | 0.04 | 0.08 | 0.5 | 0.2 | 5 | 1200 | 1.25 | 0.16 |
| Embodiment 2 | 200 | 40 | 5 | 0.04 | 0.08 | 0.5 | 0.2 | 5 | 1000 | 1.25 | 0.16 |
| Embodiment 3 | 160 | 40 | 4 | 0.04 | 0.08 | 0.5 | 0.2 | 5 | 800 | 1.25 | 0.16 |
| Embodiment 4 | 120 | 40 | 3 | 0.04 | 0.08 | 0.5 | 0.2 | 5 | 600 | 1.25 | 0.16 |
| Embodiment 5 | 100 | 40 | 2.5 | 0.04 | 0.08 | 0.5 | 0.2 | 5 | 500 | 1.25 | 0.16 |
| Embodiment 6 | 80 | 40 | 2 | 0.04 | 0.08 | 0.5 | 0.2 | 5 | 400 | 1.25 | 0.16 |
| Embodiment 7 | 60 | 40 | 1.5 | 0.04 | 0.08 | 0.5 | 0.2 | 5 | 300 | 1.25 | 0.16 |
| Embodiment 8 | 44 | 40 | 1.1 | 0.04 | 0.08 | 0.5 | 0.2 | 5 | 220 | 1.25 | 0.16 |
| Embodiment 9 | 80 | 40 | 2 | 0.076 | 0.08 | 0.95 | 0.2 | 3 | 400 | 1.25 | 0.16 |
| Embodiment 10 | 80 | 40 | 2 | 0.072 | 0.08 | 0.9 | 0.2 | 3 | 400 | 1.25 | 0.16 |
| Embodiment 11 | 80 | 40 | 2 | 0.056 | 0.08 | 0.7 | 0.2 | 4 | 400 | 1.25 | 0.16 |
| Embodiment 12 | 80 | 40 | 2 | 0.04 | 0.08 | 0.5 | 0.2 | 5 | 400 | 1.25 | 0.16 |
| Embodiment 13 | 80 | 40 | 2 | 0.008 | 0.08 | 0.1 | 0.2 | 25 | 400 | 1.25 | 0.16 |
| Embodiment 14 | 80 | 40 | 2 | 0.004 | 0.08 | 0.05 | 0.2 | 50 | 400 | 1.25 | 0.16 |
| Embodiment 15 | 80 | 40 | 2 | 0.0032 | 0.08 | 0.04 | 0.2 | 63 | 400 | 1.25 | 0.16 |
| Embodiment 16 | 80 | 40 | 2 | 0.0017 | 0.0033 | 0.5 | 0.2 | 120 | 400 | 1.25 | 0.16 |
| Embodiment 17 | 80 | 40 | 2 | 0.002 | 0.004 | 0.5 | 0.2 | 100 | 400 | 1.25 | 0.16 |
| Embodiment 18 | 80 | 40 | 2 | 0.0033 | 0.0067 | 0.5 | 0.2 | 60 | 400 | 1.25 | 0.16 |
| Embodiment 19 | 80 | 40 | 2 | 0.01 | 0.02 | 0.5 | 0.2 | 20 | 400 | 1.25 | 0.16 |
| Embodiment 20 | 80 | 40 | 2 | 0.04 | 0.08 | 0.5 | 0.2 | 5 | 400 | 1.25 | 0.16 |
| Embodiment 21 | 80 | 40 | 2 | 0.2 | 0.4 | 0.5 | 0.2 | 1 | 400 | 1.25 | 0.16 |
| Embodiment 22 | 200 | 100 | 2 | 0.016 | 0.032 | 0.5 | 0.016 | 1 | 12500 | 0.1 | 0.16 |
| Embodiment 23 | 200 | 100 | 2 | 0.016 | 0.032 | 0.5 | 0.02 | 1.3 | 10000 | 0.125 | 0.16 |
| Embodiment 24 | 200 | 100 | 2 | 0.016 | 0.032 | 0.5 | 0.05 | 3.13 | 4000 | 0.3125 | 0.16 |
| Embodiment 25 | 19 | 9.5 | 2 | 0.016 | 0.032 | 0.5 | 0.1 | 6.3 | 190 | 0.625 | 0.16 |
| Embodiment 26 | 5 | 2.5 | 2 | 0.016 | 0.032 | 0.5 | 1 | 63 | 5 | 6.25 | 0.16 |
| Embodiment 27 | 4.8 | 2.4 | 2 | 0.016 | 0.032 | 0.5 | 1.2 | 75 | 4 | 7.5 | 0.16 |
| Embodiment 28 | 80 | 40 | 2 | 0.04 | 0.08 | 0.5 | 1.225 | 31 | 65.306 | 1.25 | 0.98 |
| Embodiment 29 | 80 | 40 | 2 | 0.04 | 0.08 | 0.5 | 1.187 5 | 30 | 67.368 | 1.25 | 0.95 |
| Embodiment 30 | 80 | 40 | 2 | 0.04 | 0.08 | 0.5 | 1 | 25 | 80 | 1.25 | 0.8 |
| Embodiment 31 | 80 | 40 | 2 | 0.04 | 0.08 | 0.5 | 0.625 | 16 | 128 | 1.25 | 0.5 |
| Embodiment 32 | 80 | 40 | 2 | 0.04 | 0.08 | 0.5 | 0.25 | 6 | 320 | 1.25 | 0.2 |
| Embodiment 33 | 80 | 40 | 2 | 0.04 | 0.08 | 0.5 | 0.15 | 4 | 533.333 | 1.25 | 0.12 |
| Embodiment 34 | 80 | 40 | 2 | 0.04 | 0.08 | 0.5 | 0.062 5 | 2 | 1280 | 1.25 | 0.05 |
| Embodiment 35 | 80 | 40 | 2 | 0.04 | 0.08 | 0.5 | 0.05 | 1 | 1600 | 1.25 | 0.04 |
| Comparative Embodiment 1 | 40 | 40 | 1 | 0.04 | 0.08 | 0.5 | 0.2 | 5 | 200 | 1.25 | 0.16 |
| Comparative Embodiment 2 | 32 | 40 | 0.8 | 0.04 | 0.08 | 0.5 | 0.2 | 5 | 160 | 1.25 | 0.16 |

**Table 2**

| Embodiment | Q₁ | Q₂ |
|---|---|---|
| Embodiment 1 | 0.8% | 9.6% |
| Embodiment 2 | 1.2% | 8.4% |
| Embodiment 3 | 1.6% | 5.8% |
| Embodiment 4 | 2.2% | 3.4% |
| Embodiment 5 | 2.4% | 2% |
| Embodiment 6 | 3.4% | 1.6% |
| Embodiment 7 | 5.4% | 1% |
| Embodiment 8 | 8.2% | 0.8% |
| Embodiment 9 | 9.2% | 0.6% |
| Embodiment 10 | 8% | 0.8% |
| Embodiment 11 | 6% | 1.6% |
| Embodiment 12 | 3.0% | 2.4% |
| Embodiment 13 | 1.6% | 3.6% |
| Embodiment 14 | 0.8% | 6.4% |
| Embodiment 15 | 0.6% | 8.2% |
| Embodiment 16 | 0.8% | 8% |
| Embodiment 17 | 1.6% | 4.4% |
| Embodiment 18 | 2.2% | 3.6% |
| Embodiment 19 | 3.4% | 1.8% |
| Embodiment 20 | 4.2% | 1.4% |
| Embodiment 21 | 8.4% | 0.6% |
| Embodiment 22 | 8.2% | 0.8% |
| Embodiment 23 | 6.2% | 1.8% |
| Embodiment 24 | 3.4% | 3.2% |
| Embodiment 25 | 2% | 4.2% |
| Embodiment 26 | 1.2% | 5.6% |
| Embodiment 27 | 0.6% | 8.4% |
| Embodiment 28 | 0.6% | 9.2% |
| Embodiment 29 | 0.8% | 8.2% |
| Embodiment 30 | 1.4% | 6.0% |
| Embodiment 31 | 3% | 4.2% |
| Embodiment 32 | 4.4% | 2.0% |
| Embodiment 33 | 5.8% | 1.4% |
| Embodiment 34 | 7.4% | 1% |
| Embodiment 35 | 8.8% | 0.6% |
| Comparative Embodiment 1 | 12.2% | 0.6% |
| Comparative Embodiment 2 | 14.2% | 0.4% |

As can be seen from Table 1 and Table 2, according to Embodiments 1 to 8, when the H₁/H₂ ratio is greater than 1, the crack rate of the fragile region 52 under normal operating conditions of the battery cell 10 is relatively low. In Comparative Embodiment 1, the H₁/H₂ ratio is equal to 1, the crack rate of the fragile region 52 under normal operating conditions of the battery cell 10 is relatively high and is greater than 12%. In Comparative Embodiment 2, the H₁/H₂ ratio is less than 1, the crack rate of the fragile region 52 under normal operating conditions of the battery cell 10 is relatively high and is also greater than 12%. As can be seen from Embodiments 1 to 8 versus Comparative Embodiments 1 to 2, when the H₁/H₂ ratio is greater than 1, the crack rate of the fragile region 52 under normal operating conditions of the battery cell 10 can be reduced effectively. As can be seen from Embodiments 2 to 8 versus Embodiment 1, when the H₁/H₂ ratio is greater than 5, the explosion rate of the battery cell 10 in a case of thermal runaway is relatively high. Controlling the H₁/H₂ ratio to be less than or equal to 5 can reduce the risk of explosion of the battery cell 10.

As can be seen from the test results of Embodiments 10 to 15, when the S₁/S₂ ratio is less than or equal to 0.9, the crack rate of the fragile region 52 under normal operating conditions of the battery cell 10 is relatively low. In Embodiment 9, the S₁/S₂ ratio is greater than 0.9, and the crack rate of the fragile region 52 under normal operating conditions of the battery cell 10 increases significantly. As can be seen from Embodiments 10 to 15 versus Embodiment 9, when the S₁/S₂ ratio is controlled to be not greater than 0.9, the risk of breakage of the fragile region 52 under normal operating conditions of the battery cell 10 is reduced, and therefore, the service life of the battery cell 10 is increased.

As can be seen from Embodiment 15, when the S₁/S₂ ratio is less than 0.05, the difficulty of breaking the fragile region 52 in a case of thermal runaway of the battery cell 10 increases, and the pressure relief is not timely, and the risk of explosion of the battery cell 10 increases significantly. As can be seen from Embodiments 9 to 14 versus Embodiment 15, when the S₁/S₂ ratio is controlled to be not less than 0.5, the explosion rate of the battery cell 10 in a case of thermal runaway is reduced effectively. When the ratio falls within 0.1 ≤ S₁/S₂ ≤ 0.5, both the crack rate of the fragile region 52 under normal operating conditions of the battery cell 10 and the explosion rate of the battery cell 10 in a case of thermal runaway are relatively low, thereby ensuring that the fragile region 52 can be broken in time in a case of thermal runaway of the battery cell 10, and also ensuring that the fragile region 52 is of sufficient strength under normal operating conditions of the battery cell 10.

As can be seen from Embodiments 17 to 21 versus Embodiment 16, when the ratio satisfies 1 ≤ A/S₁ ≤ 100, the battery cell 10 can be relieved of pressure in time in a case of thermal runaway, and the explosion rate of the battery cell 10 is relatively low. When the ratio satisfies 5 ≤ A/S₁ ≤ 20, the overall performance of the battery cell 10 is higher, and both the crack rate of the fragile region 52 under normal operating conditions of the battery cell 10 and the explosion rate of the battery cell 10 in a case of thermal runaway are relatively low.

As can be seen from Embodiments 23 to 27 versus Embodiment 22, when the H₁/A ratio is greater than 10000 HBW/mm, the crack rate of the fragile region 52 under normal operating conditions of the battery cell 10 is relatively high. As can be seen from Embodiments 22 to 26 versus Embodiment 27, when the H₁/A ratio is less than 5 HBW/mm, the explosion rate of the battery cell 10 in a case of thermal runaway is relatively high. Therefore, by satisfying 5 HBW/mm ≤ H₁/A ≤ 10000 HBW/mm, this application reduces the risk of rupturing the fragile region 52 under normal operating conditions of the battery cell 10, and, through timely pressure relief in the fragile region 52, also reduces the risk of explosion of the battery cell 10 in a case of thermal runaway of the battery cell 10. As can be seen from Embodiments 24 to 25, when the ratio satisfies 190 HBW/mm ≤ H₁/A ≤ 4000 HBW/mm, the overall performance of the battery cell 10 is higher, and both the crack rate of the fragile region 52 under normal operating conditions of the battery cell 10 and the explosion rate of the battery cell 10 in a case of thermal runaway are relatively low.

As can be seen from Embodiments 29 to 35 versus Embodiment 28, when the A/B ratio is greater than 0.95, the explosion rate of the battery cell 10 in a case of thermal runaway is relatively high. As can be seen from Embodiments 28 to 34 versus Embodiment 35, when the A/B ratio is less than 0.05, the crack rate of the fragile region 52 under normal operating conditions of the battery cell 10 is relatively high. By contrast, when the A/B ratio satisfies 0.05 ≤ A/B ≤ 0.95, this application reduces the risk of rupturing the fragile region 52 under normal operating conditions of the battery cell 10, and, through timely pressure relief in the fragile region 52, also reduces the risk of explosion of the battery cell 10 in a case of thermal runaway of the battery cell 10. As can be seen from Embodiments 30 to 33, when the A/B ratio satisfies 0.12 ≤ A/B ≤ 0.8, the overall performance of the battery cell 10 is higher, and both the crack rate of the fragile region 52 under normal operating conditions of the battery cell 10 and the explosion rate of the battery cell 10 in a case of thermal runaway are relatively low. When the A/B ratio satisfies 0.2 ≤ A/B ≤ 0.5, the effect is more prominent.

It is hereby noted that to the extent that no conflict occurs, the embodiments of this application and the features in the embodiments may be combined with each other.

The foregoing embodiments are just intended to describe the technical solutions of this application, but not to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A shell component, used for a battery cell, comprising a non-fragile region and a fragile region formed in one piece, wherein a groove portion is disposed on the shell component, the non-fragile region is formed around the groove portion, the fragile region is formed at a bottom of the groove portion, and the fragile region is configured to be broken when the battery cell is relieved of an internal pressure; and
a hardness of the fragile region is H₁, and a hardness of the non-fragile region is H₂, satisfying: H₁ > H₂.

2. The shell component according to claim 1, wherein H₁/H₂ ≤ 5, and preferably H₁/H₂ ≤ 2.5.

3. The shell component according to claim 1 or 2, wherein 5 HBW ≤ H₁ ≤ 200 HBW.

4. The shell component according to any one of claims 1 to 3, wherein 5 HBW ≤ H₂ ≤ 150 HBW.

5. The shell component according to any one of claims 1 to 4, wherein an average grain size of the fragile region is S₁, and an average grain size of the non-fragile region is S₂, satisfying: S₁/S₂ ≤ 0.9.

6. The shell component according to claim 5, wherein S₁/S₂ ≥ 0.05, and preferably 0.1 ≤ S₁/S₂ ≤ 0.5.

7. The shell component according to claim 5 or 6, wherein 0.4 µm ≤ S₁ ≤ 75 µm, and preferably 1 µm ≤ S₁ ≤ 10 µm.

8. The shell component according to any one of claims 5 to 7, wherein 10 µm ≤ S₂ ≤ 150 µm, and preferably 30 µm ≤ S₂ ≤ 100 µm.

9. The shell component according to any one of claims 1 to 8, wherein a minimum thickness of the fragile region is A, and an average grain size of the fragile region is S₁, satisfying: 1 ≤ A/S₁ ≤ 100, and preferably 5 ≤ A/S₁ ≤ 20.

10. The shell component according to any one of claims 1 to 9, wherein a minimum thickness of the fragile region is A, satisfying: 5 HBW/mm ≤ H₁/A ≤ 10000 HBW/mm, and preferably 190 HBW/mm ≤ H₁/A ≤ 4000 HBW/mm.

11. The shell component according to any one of claims 1 to 10, wherein a minimum thickness of the fragile region is A, and a minimum thickness of the non-fragile region is B, satisfying: 0.05 ≤ A/B ≤ 0.95, preferably 0.12 ≤ A/B ≤ 0.8, and preferably 0.2 ≤ A/B ≤ 0.5.

12. The shell component according to claim 11, wherein 1 mm ≤ B ≤ 5 mm, preferably 1.2 mm ≤ B ≤ 3.5 mm, and preferably 2 mm ≤ B ≤ 3 mm.

13. The shell component according to any one of claims 9 to 12, wherein 0.02 mm ≤ A ≤ 1.6 mm, and preferably 0.06 mm ≤ A ≤ 0.4 mm.

14. The shell component according to any one of claims 1 to 13, wherein the shell component comprises a pressure relief region, the groove portion comprises one level of nick, the nick is disposed along an edge of the pressure relief region, the pressure relief region is configured to be able to burst open within a boundary defined by the nick, and the fragile region forms a bottom of the nick.

15. The shell component according to claim 14, wherein the shell component comprises a first surface and a second surface disposed opposite to each other, and the nick is recessed from the first surface toward the second surface.

16. The shell component according to any one of claims 1 to 13, wherein the shell component comprises a first surface and a second surface disposed opposite to each other, the groove portion comprises multiple levels of nicks, the multiple levels of nicks are disposed sequentially on the shell component along a direction from the first surface to the second surface, and the fragile region is formed at a bottom of a level of nick farthest from the first surface; and
the shell component comprises a pressure relief region, each level of nick is disposed along an edge of the pressure relief region, and the pressure relief region is configured to be able to burst open within a boundary defined by the level of nick farthest from the first surface.

17. The shell component according to claim 16, wherein a level of nick farthest from the second surface is recessed from the first surface toward the second surface.

18. The shell component according to claim 14 or 16, wherein the shell component comprises a first surface and a second surface disposed opposite to each other, the groove portion further comprises one level of countersink, the countersink is recessed from the first surface toward the second surface, and the pressure relief region is formed on a bottom wall of the countersink.

19. The shell component according to claim 14 or 16, wherein the shell component comprises a first surface and a second surface disposed opposite to each other, the groove portion further comprises multiple levels of countersinks, the multiple levels of countersinks are disposed sequentially on the shell component along a direction from the first surface to the second surface, a level of countersink farthest from the second surface is recessed from the first surface toward the second surface, and the pressure relief region is formed on a bottom wall of a level of countersink farthest from the first surface.

20. The shell component according to claim 18 or 19, wherein an internal space of the countersink is a cylinder, a prism, a circular frustum, or a polygonal frustum.

21. The shell component according to any one of claims 14 to 20, wherein the nick comprises a first nick section and a second nick section, the first nick section intersects the second nick section, and the first nick section and the second nick section are disposed along an edge of the pressure relief region.

22. The shell component according to claim 21, wherein the nick further comprises a third nick section, the first nick section and the third nick section are disposed opposite to each other, the second nick section intersects the third nick section, and the first nick section, the second nick section, and the third nick section are disposed along the edge of the pressure relief region.

23. The shell component according to claim 22, wherein the first nick section, the second nick section, and the third nick section are connected sequentially, and the first nick section, the second nick section, and the third nick section define the pressure relief region.

24. The shell component according to claim 22, wherein the first nick section, the second nick section, and the third nick section define two pressure relief regions, and the two pressure relief regions are located on two sides of the second nick section respectively.

25. The shell component according to any one of claims 14 to 20, wherein the nick is a groove extending along a non-closed track.

26. The shell component according to any one of claims 14 to 20 or claim 25, wherein the nick is an arcuate groove.

27. The shell component according to any one of claims 14 to 20, wherein the nick is a groove extending along a closed track.

28. The shell component according to any one of claims 14 to 20 or claim 27, wherein the nick is an annular groove.

29. The shell component according to any one of claims 14 to 28, wherein an area of the pressure relief region is D, satisfying: 90 mm² ≤ D ≤ 1500 mm², preferably 150 mm² ≤ D ≤ 1200 mm², preferably 200 mm² ≤ D ≤ 1000 mm², and preferably 250 mm² ≤ D ≤ 800 mm².

30. The shell component according to any one of claims 1 to 29, wherein the shell component comprises a first surface and a second surface disposed opposite to each other, the groove portion is recessed from the first surface toward the second surface, the groove portion forms an outer edge on the first surface, and a region at a distance beyond a preset distance from the outer edge on the shell component is the non-fragile region.

31. The shell component according to claim 30, wherein the preset distance is L, satisfying: L = 5 mm.

32. The shell component according to any one of claims 1 to 31, wherein the shell component further comprises a transition region, the transition region connects the fragile region and the non-fragile region, and an average grain size of the transition region is S₃, satisfying: S₃ ≤ S₂.

33. The shell component according to any one of claims 1 to 32, wherein the shell component is an end cap, the end cap is configured to seal an opening of a housing, and the housing is configured to accommodate an electrode assembly.

34. The shell component according to any one of claims 1 to 32, wherein the shell component is a housing, an opening is created on the housing, and the housing is configured to accommodate an electrode assembly.

35. The shell component according to claim 34, wherein the housing comprises a plurality of wall portions formed in one piece, the plurality of wall portions jointly define an internal space of the housing, and the groove portion is disposed on at least one of the wall portions.

36. The shell component according to claim 35, wherein the plurality of wall portions comprise a bottom wall and a plurality of sidewalls disposed around the bottom wall, and the opening is formed at an end opposite to the bottom wall on the housing;
the groove portion is disposed on the bottom wall; and/or
the groove portion is disposed on at least one of the sidewalls.

37. The shell component according to any one of claims 34 to 36, wherein the housing is a cuboid.

38. The shell component according to any one of claims 1 to 37, wherein the shell component is made of a material comprising an aluminum alloy.

39. The shell component according to claim 38, wherein the aluminum alloy comprises the following constituents at the following mass percent: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%.

40. The shell component according to claim 38, wherein the aluminum alloy comprises the following constituents at the following mass percent: aluminum ≥ 96.7%, 0.05% ≤ copper ≤ 0.2%, iron ≤ 0.7%, manganese ≤ 1.5%, silicon ≤ 0.6%, zinc ≤ 0.1%, a mass percent of each of other individual elements ≤ 0.05%, and a total mass percent of other elements ≤ 0.15%.

41. A battery cell, comprising:
the shell component according to any one of claims 1 to 40.

42. The battery cell according to claim 41, wherein the battery cell further comprises a housing, an opening is created on the housing, and the housing is configured to accommodate an electrode assembly; and
the shell component is an end cap, and the end cap is configured to seal the opening.

43. The battery cell according to claim 41, wherein the shell component is a housing, an opening is created on the housing, and the housing is configured to accommodate an electrode assembly; and
the battery cell further comprises an end cap, wherein the end cap is configured to seal the opening.

44. A battery, comprising the battery cell according to any one of claims 41 to 43.

45. The battery according to claim 44, wherein the fragile region is located at a lower part of the battery cell.

46. The battery according to claim 45, wherein the battery cell comprises a housing, the housing is configured to accommodate an electrode assembly, the housing comprises a bottom wall and a plurality of sidewalls disposed around the bottom wall, the bottom wall and the sidewalls are formed in one piece, an opening is formed at an end opposite to the bottom wall on the housing, and the fragile region is located on the bottom wall.

47. The battery according to claim 45, wherein the battery cell comprises an end cap, the end cap is configured to seal an opening of a housing, the housing is configured to accommodate an electrode assembly, and the fragile region is located on the end cap.

48. An electrical device, comprising the battery according to any one of claims 44 to 47.
